(19) Europäisches Patentamt
European Patent Office
Office européen des brevets

(11) Veröffentlichungsnummer: **0 270 831 B1**

(12) **EUROPÄISCHE PATENTSCHRIFT**

(45) Veröffentlichungstag der Patentschrift: **27.01.93**

(51) Int. Cl.⁵: **C09D 101/08**, C09D 129/04, C09D 161/06, C08L 67/04, C08F 299/02

(21) Anmeldenummer: **87116112.1**

(22) Anmeldetag: **02.11.87**

(54) **Lösungsmittelfreie, monomerarme bzw. -freie, polymerisierbare Schmelzmasse, Verfahren zu deren Herstellung und Verarbeitung.**

(30) Priorität: **04.12.86 DE 3641436**

(43) Veröffentlichungstag der Anmeldung:
**15.06.88 Patentblatt 88/24**

(45) Bekanntmachung des Hinweises auf die Patenterteilung:
**27.01.93 Patentblatt 93/04**

(84) Benannte Vertragsstaaten:
**AT BE CH DE ES FR GB GR IT LI LU NL SE**

(56) Entgegenhaltungen:
**EP-A- 0 184 349**
**FR-A- 1 540 413**
**US-A- 3 956 421**

(73) Patentinhaber: **Bolte, Georg, Dr.**
**Maximilian-Kolbe-Strasse 48**
**W-4802 Halle/Westfalen(DE)**

Patentinhaber: **Hinterwaldner, Rudolf**
**Kastanienstrasse 13**
**W-8000 München 90(DE)**

(72) Erfinder: **Bolte, Georg, Dr.**
**Maximilian-Kolbe-Strasse 48**
**W-4802 Halle/Westfalen(DE)**
Erfinder: **Hinterwaldner, Rudolf**
**Kastanienstrasse 13**
**W-8000 München 90(DE)**

(74) Vertreter: **von Füner, Alexander, Dr. et al**
**Patentanwälte v. Füner, Ebbinghaus, Finck**
**Mariahilfplatz 2 & 3**
**W-8000 München 90(DE)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung ist eine lösungsmittelfreie, monomerarme bzw. monomerfreie, polymerisierbare und strahlenhärtbare Schmelzmasse zum Beschichten von flächigen Substraten und/oder Formkörpern aus Metall, Kunststoff und/oder Cellulose-Material und/oder anorganischen Materialien und ein Verfahren zu deren Herstellung. Die erfindungsgemäße Schmelzmasse ist im besonderen zum korrosionsbeständigen und abrasionsfesten Ausrüsten von flächigen Packmittelsubstraten, vorzugsweise für die Lebensmittel- und Pharmazieverpackung, geeignet. Aber auch für andere Einsatzgebiete sind die mit den erfindungsgemäßen Schmelzmassen ausgerüsteten Substrate einsetzbar, wie z.B. für den Karosseriebau, Bauwesen und dergleichen.

Das korrosionsbeständige und abrasionsfeste Ausrüsten von flächigen Substraten aus Metall, Kunststoff und Cellulose-Materialien ist in der Technik eine bekannte und werkstoffbedingte Notwendigkeit, damit Gegenstände gegen Umwelteinflüsse geschützt und die Lebensdauer verlängert werden. Der Schutz gegen Korrosion hat einen hohen Stellenwert in der Volkswirtschaft. Bei Packmitteln, insbesondere für den Nahrungsmittel- und Pharmaziebereich werden an die Korrosionsschutzmittelausrüstungen zusätzlich hohe Anforderungen gestellt. Sie müssen gegen die Füllgüter chemisch und physikalisch inert sein und dürfen keine toxischen, geschmacks- und geruchsbeeinflussenden Stoffe abgeben. Um dieses Ziel nach dem heutigen Stand der Technik zu erreichen, sind für die korrosionsbeständige und abrasionsfeste Ausrüstung von flächigen Substaten überwiegend noch lösungsmittelhaltige Beschichtungsmassen und Lacke im Einsatz. Bei dieser Produktgruppe sind die Lösungsmittel wichtige Hilfsstoffe, um die aus Polymeren und Harzen bestehenden Korrosionsschutzmittel in einen verarbeitungsfähigen Zustand zu bringen, weil die Rohstoffe überwiegend als feste Stoffe vorliegen. Der flüssige Aggregatzustand hat aber noch eine weitere essentielle Funktion und zwar die Benetzung auf den zu schützenden Substratoberflächen. Denn die Benetzung ist für die Haftung (Adhäsion) eine wichtige Voraussetzung.

Die dazu notwendigen Lösungsmittel können aliphatischer und aromatischer Art, wie z.B. Ester, Ketone, Toluol, Xylol und dergleichen sein. Nach der Applikation und dem Abbinden sind sie aus den Korrosionsschutzmitteln zu entfernen bzw. müssen ausgetrieben werden. Diese freigesetzten Lösungsmittel wurden vor Jahren noch an die Umwelt abgegeben. Durch die fortschreitende Emissionsgesetzgebung ist dies nur noch in sehr beschränktem Umfang möglich. Deshalb wurden in den letzten Jahren verstärkt Recyclingprozesse zur Lösungsmittelrückgewinnung vorgeschlagen. Obwohl diese Rückgewinnungsanlagen einen relativ hohen Nutzungsgrad besitzen und Lösungsmittel bis zu 95 % in der Praxis rückgewinnbar sind, sind solche Prozesse sehr kostenintensiv in Investition und Betrieb. Sie haben aber zusätzlich den Nachteil, daß die lösungsmittelhaltige Abluft zusätzlich noch einer Nachverbrennung zugeführt werden muß, um den gesetzlichen Vorschriften der TA-Luft zu genügen. Ein weiteres Problem beim Recycling der Lösungsmittel ist darin gegeben, daß sie vielfach als Gemisch aus zwei oder mehreren Lösern vorliegen und deshalb nicht universell für neue Beschichtungsmassen und Lacke einsetzbar sind. Auch haben die zurückgewonnenen Lösungsmittel und deren Gemische keine unbeschränkte Wiedereinsetzbarkeit. D.h. nach einigen Recyclingprozessen müssen sie einer Beseitigung, z.B. durch Verbrennen, zugeführt werden. Insgesamt kann gesagt werden, daß diese Manipulationen technisch und wirtschaftlich sehr aufwendig sind und praktisch keinen 100 %igen Wirkungsgrad sicherstellen.

Eine partielle Verbesserung brachten Korrosionsschutzmittel auf wäßriger Dispersionsbasis und solche mit einem höheren Festkörpergehalt. Bei den wäßrigen Korrosionsschutzmitteln zeigte sich jedoch, daß in vielen industriellen Einsatzgebieten auf organische Lösungsmittel vielfach nicht gänzlich verzichtet werden kann. Somit bestand das Problem einer Lösungsmittelrückgewinnung weiterhin. Dies trifft vor allem u.a. auch auf die Elektrotauchlackierung zu, wo wäßrige Dispersionslacke mit Lösungsmittelgehalten bis zu 20 % - bezogen auf Fertigware - einzusetzen sind.

In jüngster Zeit sind auch lösungsmittelfreie Beschichtungsmassen und Lacke bekannt geworden. Hierbei handelt es sich um sogenannte **Ein- und Mehrtopf**-Systeme. Während die Eintopfsystome applikationsgerecht sind und u.a. mit der Luftfeuchtigkeit reaktiviert werden und vernetzen, muß bei den Zwei- und Mehrtopfsystemen zuerst durch homogenes Mischen ein gebrauchsfertiges Produkt hergestellt werden. Da diese applikationsgerechten Korrosionsschutzmittel dann eine sog. Topfzeit besitzen, während dieser sie verarbeitbar sind, haben sie für industrielle Einsätze eine Reihe von Nachteilen, die nicht immer durch Misch- und Doservorrichtungen kompensierbar sind. Da sie ferner als lösungsmittelfreie Korrosionsschutzmittel ebenfalls in einem flüssigen Aggregatzustand vorliegen müssen, bestehen ihre einzelnen reaktiven Bestandteile aus relativ niedermolekularen Verbindungen. Diese niedermolekularen Verbindungen, auch als reaktive Verdünner bekannt, sind vielfach nicht nur physiologisch bedenklich, sondern besitzen charakteristische, intensive, negative Geschmacks- und Geruchsnoten. Der erzielbare Vernetzungsgrad liegt oftmals nur bei ≦ 90 %, so daß sie u.a. zum Ausrüsten von Packstoffen für Lebensmittel und Pharmazeutika

nicht eingesetzt werden können. Aber auch im technischen Bereich kann ein zu niederer Vernetzungsgrad zu Problemen, vor allem in der Beständigkeit gegenüber Umwelteinflüssen, führen. Insgesamt haben die reaktiven Verdünner den Nachteil, dann wenn Reste davon, auch im ppm-Bereich, nicht einvernetzt werden, sie die Haftung (Adhäsion) an der Grenzfläche negativ beeinflussen, weil sie wie Lösungsmittel vagabundieren können.

Um nun die Aushärtung bzw. das Vernetzen bei hohen Fertigungsgeschwindigkeiten zu beschleunigen, sind in jüngster Zeit auch polymerisierbare Beschichtungsmassen und Lacke bekannt geworden, die mittels ionisierender Strahlen, insbesondere Elektronenstrahlen, und UV-Strahlen, härtbar sind.

Damit Beschichtungsmassen und Lacke unter UV-Strahlen härtbar werden, müssen ihnen sog. Photoinitiatoren und evtl. Synergisten zugesetzt werden. Diese photosensitiven Additive verbleiben aber nach der Härtung in der Korrosionsschutzschicht und kontaminieren sowohl beim Stapeln als auch beim Kontakt mit Füllgütern die Umwelt und sind deshalb für die Lebensmittel- und Pharmazeutika-Verpackung nicht geeignet, weil sie als physiologisch bedenklich einzustufen sind. Beim Härten mit ionisierenden Strahlen sind solche Kontaminierungsprobleme durch photosensitive Additive und Synergisten nicht gegeben. Die nach dem heutigen Stand der Technik bekannten strahlenhärtbaren Beschichtungsmassen und Lacke haben aber insgesamt noch einen weiteren großen Nachteil, weil sie aus Verarbeitungsgründen einen relativ hohen Anteil von acrylgruppenhaltigen Monomeren als reaktive Verdünner enthalten müssen, damit sie applizierbar sind. Diese Acrylmonomere können mehr oder weniger physiologisch bedenklich sein. Einige davon werden auch als toxisch eingestuft. Einer der größten Nachteile jedoch ist die geschmacks- und geruchsbeeinflussende Komponente gegenüber der Umwelt, den Füllgütern, insbesondere im Lebensmittel- und Pharmabereich, die durch einen Restmonomergehalt, auch bei sehr niedrigen ppm-Werten, verursacht wird.

Die vorstehend beschriebenen Korrosionsschutzmittel machen es in Zukunft entweder aus wirtschaftlicher oder technischer Sicht dem Fachmann schwer, unter umweltfreundlichen und guten arbeitshygienischen Bedingungen korrosionsbeständige Ausrüstungen vorzunehmen, weil der Stand der Technik keine Lösungen anbietet, die allen diesen Anforderungen gerecht werden. Gerade im Gebiet der Packmittel für Lebensmittel und Pharmaka werden hohe Anforderungen gestellt, wie allein aus den Empfehlungen des Bundesgesundheitsamtes (BGA) **"Kunststoffe im Lebensmittelverkehr"** oder aus den gesetzlichen Bestimmungen der Food and Drug Administration (FDA) sowie den einzelnen Umweltgesetzen zu entnehmen ist. Ein zusätzliches Problem können auch die in konventionellen Korrosionsschutzmitteln notwendigen Additive darstellen, wie in Gächter/Müller **"Kunststoff-Additive"** 2. Ausgabe, Hanser-Verlag, München, 1983, im Kapitel 18 **"Gewerbe- und lebensmittelhygienische Aspekte Von Kunststoff-Additiven"** beschrieben ist. Diese Problematik wird besonders aus dem Aufsatz von Piringer et al zum Thema **"Der Einfluß von Restlösemitteln und monomeren Acrylaten aus Verpackungen auf die sensorischen Eigenschaften von Lebensmitteln"**, Verpackungsrundschau, Heft 8/1986, Seite 53 - 58, verdeutlicht, weil gerade die Restlösemittel und die Acrylmonomere einen besonderen Einfluß in sensorischer Hinsicht auf Lebensmittelfüllgüter haben. An den aufgezeigten relativen Schwellenwerten von inerten Lösemitteln, Acrylaten und Methacrylaten, hinsichtlich Geruch und Geschmack wird demonstrativ aufgezeigt, daß beim Einsatz solcher niedermolekularer Verbindungen diese problembehaftet bleiben. So liegt der relative Geruchsschwellenwert z.B. bei n-Butylacrylat bei 0,002 und bei 2-Ethyl-hexylmethacrylat bei 0,02 mg/kg.

Des weiteren kann gesagt werden, daß die Bewertung der gesetzlichen Maßnahmen und Auflagen in Umwelt, Gewerbe- und Lebenshygiene und dergleichen in der europäischen Gemeinschaft wie im nordamerikanischen Markt und Japan weitgehendst identisch sind, wenn von Nuancen in den Durchführungsbestimmungen abgesehen wird. Zusammenfassende und vergleichende Darstellungen sind u.a. von Keener, R.L., Plamondon, J.E. und West, A.S. **"Recent Developments in the Regulation of Industrial Chemicals in the United States and Europe"**, Vortrag RADCURE EUROPE '85, Basel/Schweiz, Veranstalter: AFP/SME, Dearborn, Mich. 48121, USA und in dem Buch Ronald Brickman et al **"Controlling Chemicals: The Politics of Regulation in Europe and the United States"** Cornell University Press, Ithaca, NY, 1985, publiziert worden.

Konventionelle Lacke und Anstrichmittel auf unterschiedlicher Polymerbasis und in Lösungsmittel gelöst, sind in der Literatur sehr umfangreich beschrieben, wie z.B. H. Kittel **"Lehrbuch der Lacke und Beschichtungen"**, Bd. 4, 5 und 7, Verlag W.A. Colomb Verlagsgesellschaft mbH, Berlin und Oberschwandorf, und deshalb muß dieser Stand der Technik nicht besonders gewürdigt werden.

Das korrosionsbeständige und abrasionsfeste Ausrüsten von flächigen Substraten und/oder Formkörpern insbesondere von Metallen und Cellulose-Materialien mit Beschichtungsmitteln, die frei von inerten Lösungsmitteln sind, ist ebenfalls in der industriellen Praxis hinreichend bekannt. Hierzu wurden Beschichtungsmittel eingesetzt, bei denen die Rückgratpolymere in reaktiven Verdünnern gelöst oder die Basisprodukte in einem solchen flüssigen Aggregatzustand vorliegen, daß sie applizierbar sind. Wenngleich diese

reaktiven Verdünner und/oder andere flüssige Coreaktanten durch Härten bzw. Vernetzen in die Polymermatrix integriert werden, bleiben immer noch freie Reste in Abhängigkeit des Vernetzungsgrades übrig. Diese nicht eingebauten Reste lassen sich vielfach auch nicht durch zusätzliche und produktverteuernde Reinigungsprozesse entfernen oder auf ein Maß reduzieren, daß sie den gesetzlichen Bestimmungen entsprechen. Da sie zusätzlich physiologisch bedenklich sein können, sind solche Korrosionsschutzmittel nur beschränkt einsatzfähig, wobei der Lebensmittel- und Pharmakabereich völlig auszuschließen ist. Dies schon zusätzlich allein dadurch, daß das Füllgut sensorisch, d.h. geschmacklich und geruchlich beeinflußt wird. Durch Einbrennen und/oder Nachhärtungen lassen sich zwar ebenfalls qualitative Verbesserungen bei nicht thermosensiblen Substraten erzielen, die aber oftmals nicht ausreichen, um den geforderten Mindeststandard zu erreichen. Hinzu kommen die zusätzlichen Kostenbelastungen für Endprodukte durch solche Nachbehandlungsmaßnahmen. Deshalb war man bemüht, über die Strahlenhärtung bessere und wirtschaftlichere Lösungen zu erarbeiten, die gleichzeitig auch noch die Wirtschaftlichkeit sicherstellen. Wegen des unter wirtschaftlichen Bedingungen nicht erzielbaren Mindestvernetzungsgrades - wie bereits vorstehend erwähnt - konnte mit diesen strahlenhärtbaren Beschichtungsmitteln nicht der erhoffte Durchbruch erzielt werden. So werden in der europäischen Patentanmeldung 0 157 396 strahlenhärtbare Überzüge für Stahlbleche beschrieben, die nach ihrer Aushärtung mit Strahlen verformbar sind. Da sie aber bei Raumtemperatur verarbeitet werden, besitzen sie einen relativ hohen Gehalt an reaktiven Verdünnern bzw. niedermolekularen Acrylmonomeren. Abgesehen von einem relativ hohen Gehalt an Restmonomeren, den diese strahlengehärteten Beschichtungsmassen aufweisen, ist auch deren Verformbarkeit eingeschränkt. Denn der Fachmann weiß, daß mit steigendem Gehalt an kurzkettigen, niedermolekularen Monomeren in einer Beschichtungsmatrix die Flexibilität (thoughness) und die Sprödigkeit zunehmen. Bei einer Verformung kann dann eine Vielzahl von Haarrissen im Korrosionsschutzfilm entstehen, wodurch die Wirksamkeit erheblich reduziert wird.

In einer anderen europäischen Patentanmeldung 0 184 345 werden strahlenhärtbare, thermoplastische Überzugsmassen für Holz und andere Substrate beschrieben, die aus copolymerisierbaren ethylenisch ungesättigten Polyestern und thermoplastischen Polymeren bestehen. Um sie als Beschichtungsmassen verarbeiten zu können, sind Monomere bzw. reaktive Verdünner und/oder inerte organische Lösungsmittel notwendig. Damit werden Beschichtungsmittel vorgestellt, die zwar gute Endeigenschaften liefern können, jedoch mit den Problemen des Verdampfens der inerten Lösungsmittel und denen der Restlösungsmittel- und Monomerengehalten behaftet sind.

Zum korrosionsbeständigen Ausrüsten sind des weiteren auch sog. Heißschmelzmassen (Hot Melt Coatings) bekannt geworden, die auf der Basis von inerten Harzen, Wachsen, Thermoplasten und/oder Elastomeren aufgebaut sind. Im deutschen Sprachgebrauch wird von der Benutzung des unverbundenen Terminus **"heiß"** abgeraten (siehe Römpp's Chemie-Lexikon, 8. Aufl., Bd. 3 (1983), S. 1763), deshalb wird nachfolgend nur noch von Schmelzmassen gesprochen. Während die mit den Schmelzmassen verwandten Schmelzklebstoffe in vielen Branchen eine hohe Bedeutung erlangt haben, sind die Schmelzmassen relativ bedeutungslos geblieben, wenn von einigen wenigen Einsatzgebieten, wie Korrosionsschutzfilmen, abgesehen wird. Diese Korrosionsschutzfilme entstehen aus einer Schmelztauchmasse, die u.a. aus Celluloseester, Weichmachergemischen und Mineralölzusätzen besteht, wenn z.B. Werkzeugteile, Maschinenteile, in die heiße Masse eintauchen und man sie anschließend abkühlen läßt. Der sich bildende Film bzw. Überzug kann später rückstandsfrei abgezogen werden.

Unabhängig davon, ob es sich um Schmelzmassen für Überzugs- oder Klebzwecke handelt, sind die thermoplastischen Basisrohstoffe einschließlich der Harze und Weichmacher thermosensibel und besonders in Gegenwart von Luftsauerstoff einer thermischen Oxidation ausgesetzt. Dabei werden nicht nur die Produkteigenschaften verändert, sondern es entstehen auch Crackprodukte, die physiologisch bedenklich sind. Diese damit verbundene thermische Problematik wird in der internationalen Fachspracne mit dem Terminus **"Heat History"** umschrieben. Während bei den Schmelzklebstoffen mit Stabilisatoren und Antioxidantien gearbeitet werden kann, können sie bei den Schmelzmassen nur dann eingesetzt werden, wenn sie im technischen Bereich zum Einsatz gelangen. Auch durch ein Abdecken mit Schutzgasen, wie z.B. Stickstoff ($N_2$), kann ein thermooxidativer Abbau reduziert werden. Ein weiterer Nachteil der thermoplastischen Schmelzbeschichtungsmassen sind die relativ niedrigen Erweichungspunkte, die vorzugsweise unter +150 °C, insbesondere unter +120 °C, liegen. Ein anderer Nachteil ist dadurch gegeben, daß die Rückgratpolymere bereits in ihrem Endzustand als Makromolekül vorliegen und deshalb sehr hohe Verarbeitungstemperaturen von +180 bis +270 °C notwendig sind, um eine ausreichende Benetzung und damit Haftung auf den unterschiedlichen Substratoberflächen zu erzielen. Sicherlich gibt es auch bei niederer Temperatur schmelzende Massen, jedoch besitzen solche keine Wärmestandsfestigkeit und auch die Chemikalienbeständigkeit ist nicht immer ausreichend. Solche Schmelzbeschichtungsmassen sind u.a. in der DE-OS 24 25 395 beschrieben, die auf der Grundlage von Ethylen-Vinylacetat-Copolymeren formuliert

sind. Weitere Schmelzmassen sind in der Monographie R. Jordan **"Schmelzklebstoffe"**, Bd. 4a (1985) und Bd. 4b (1986), HINTERWALDNERVERLAG, München, beschrieben. Darunter werden auch Polyesterschmelzmassen aufgeführt, die auf der Basis von linearen Copolyestern aus Terephthal- und/oder Isophthalsäure aufgebaut sind und von amorph bis kristallin sein können (DE-OS 24 14 287).

In den DE-OSs 19 17 788 und 31 06 570 sind strahlungsempfindliche telomerisierte bzw. acryloxy- oder methacryloxyterminierte Polyester beschrieben, die vorzugsweise aus aliphatischen und cycloaliphatischen und nur partiell aus aromatischen Polycarbonsäuren und mehrwertigen aliphatischen Alkoholen hergestellt werden. Sie sind ausgeprägt linear und können nur unter erschwerten Bedingungen mit Strahlen gehärtet werden. Da die Abstände der relativen Acryl- bzw. Methacrylgruppen mit steigenden Molekulargewichten bei linearen Molekülen größer werden, steigt auch der notwendige Energiebedarf der zu einer Vernetzung bzw. Härtung notwendig wird. Trotz dieses erhöhten Energiebedarft ist eine gute Durchvernetzung nicht gewährleistet, damit ein Vernetzungsgrad ≧ 90 % erzielt wird. Werden dagegen niedermolekulare Polymere bzw. Monomere eingesetzt, kann zwar ein relativ ausreichender Vernetzungsgrad erreicht werden, jedoch sind solche Überzüge außerordentlich spröde und damit stoß- und schlagempfindlich und nicht verformbar. Es können zusätzlich Spannungen bei Belastungen in den Überzügen entstehen, die dann zumindest zum Ausbilden von feinen Haarrissen führen. Hierdurch wird die Wasser-, Chemikalien-, Temperatur- und damit die Korrosionsbeständigkeit negativ beeinflußt.

Analoges gilt bezüglich den Beständigkeiten auch für höhermolekularen linearen Polyester, wenngleich ihre gehärteten Überzüge zähelastischer sein können. Einer der essentiellen Hauptangriffspunkte sind die noch freien, unvernetzten Reaktionsgruppen.

Ein noch wesentlicher Nachteil ist in der Thermosensibilität und den Rheologieeigenschaften gegeben, vor allem dann, wenn es sich um höhermolekulare lineare Polyester handelt. Denn diese bauen mit steigender Temperatur sehr stark oxidativ ab.

In einer weiteren DE-OS 36 13 082 werden Haftklebstoffe auf der Grundlage von strahlenhärtbaren, (meth)-acrylgruppenhaltigen Polyestern beschrieben. Nach Römpps Chemie-Lexikon, 8. Auflage (1983), S. 1605 ist "Haftklebstoffe" eine Bezeichnung für elastische und dauernd klebfähige Selbstklebmassen mit großen Adhäsions- und kleinen Kohäsionskräften, die schon unter geringem Druck bei Raumtemperatur sofort haften und deren Verbindungen mehrmals gelöst werden können. Sie werden in der Regel auf Trägermaterialien aufgetragen. Kennzeichnend für diese Systeme ist, daß die Klebschicht dauernd im Zustand einer **"Flüssigkeit"** mit sehr hoher Viskosität verbleibt, was in jedem Fall niedrige Einfriertemperaturen voraussetzt. Solche Schmelzhaftklebstoffe lassen sich zwar aus der Schmelze verarbeiten und anschließend mit Strahlen vernetzen, jedoch sind die daraus resultierenden Schichten permanent klebrig und zeigen auch als Polyester völlig andere Charakteristika als ein indifferenter Überzug zum Korrosions- und Abrasionsschutz. Somit sind sie nicht stoß-, schlag- und abrasionsfest und lassen sich auch nicht sterilisieren. Gegenüber Füllgüter im Packmittel und gegenüber Staub, Schmutz, Fett und dergleichen im Oberflächenschutzbereich sind ihre Beschichtungen nicht indifferent. Deshalb sind sie für korrosions- und abrasionsbeständige Beschichtungen völlig ungeeignet und deshalb nicht einmal mit konventionellen Korrosionsschutzüberzügen vergleichbar. Dies gilt in gleicher Weise für die in dieser Schrift beschriebenen Polyester für Haftklebstoffe.

Um die mit der **"Heat History** verbundenen kritischen Parameter einerseits und die Verbesserung der Endeigenschaften, wie z.B. Wärmestandfestigkeit, andererseits besser in Griff zu bekommen, wurden auch schon reaktive Schmelzmassen vorgeschlagen. Bei diesen Schmelzmassen handelt es sich vorzugsweise um Kleb- und Dichtstoffe, die zwar analog einer Schmelzmasse aus einer Schmelze bei Temperaturen unter ≦ 150 °C, insbesondere ≦ 100 °C, verarbeitet werden und dadurch frühzeitig funktionell handhabbar sind, aber ihre quervernetzende Funktion erst durch die Umgebungsfeuchtigkeit ausgelöst wird. Hierbei handelt es sich vorzugsweise um feuchtigkeitshärtende Polyurethansysteme. Die Härtung benötigt in Abhängigkeit der Schichtstärke und Umgebungsfeuchtigkeit zwischen 1 und 96 Stunden. Für eine industrielle Fertigung eine undiskutable Härtungsphase, abgesehen davon, daß unvernetzte Härteranteile migrieren können. Andere reaktive Schmelzmassen sind bis heute weder in der Literatur noch in der Wirtschaft bekannt geworden. Die Gründe sind sicherlich nicht allein in der sog. **"Heat History"** sondern vielmehr an dem mangelnden Angebot an geeigneten Rohstoffen zu suchen. Um den laufend fortzuschreibenden gesetzlichen Auflagen zur Verbesserung der Umwelt, der Lebensmittel- und Arbeitshygiene und den sensorischen Problemen gerecht zu werden, genügen nicht allein mehr präventive Maßnahmen, weil diese einerseits mit höheren Investitionsaufwänden in Anlagen, Meßgeräten und dgl. und andererseits mit kostenaufwendigen Überwachungen verbunden sind. Deshalb ist es sowohl für eine bessere Ökologie als auch in arbeits- und lebensmittelhygienischer Hinsicht besser, diese bestehenden und die auf uns zukommenden Aufgabenstellungen dadurch zu eliminieren, daß man die Ursachen soweit als möglich beseitigt und dabei noch eine hohe Wirtschaftlichkeit sicherstellt. Ungeachtet dieser zahlreichen Bemühungen ist es bisher nicht gelungen, Schmelzmassen mit Eigenschaften herzustellen, die denen von aus organischen Lösungen aufgebrachten auch nur einigermaßen gleichwertig wären. Da aber korrosionsbeständige Ausrüstungen schon aus volkswirtschaftlichen Gründen in einem öffentlichen Interesse und Notwendigkeit stehen, ist es Aufgabe und Ziel vorliegender Erfindung, für die Zukunft innovative Wege aufzuzeigen, die vorstahende und andere Nachteile beseitigt und zusätzlich für den lebensmittel- und gewerbehygienischen Bereich auch die sensorischen Probleme löst.

Diese Probleme werden, wie aus den nachstehenden Ansprüchen ersichtlich, gelöst.

Gegenstand der Erfindung sind deshalb lösungsmittelfreie, monomerarme bzw. - freie, polymerisierbare Schmelzmassen zur Ausbildung von korrosionsbeständigen, abrasionsfesten Beschichtungen und/oder zur Ausbildung eines Schutzfilmes mit Barriereeigenschaften auf flächigen Substraten und Formkörpern aus Metall, Kunststoff, Cellulose-Materialien und/oder anorganischen Materialien, insbesondere solchen für Verpackungszwecke, bestehend aus

(a) einem oder mehreren polymerisierbaren hydroxylgruppenhaltigen Polymeren aus der Gruppe eines

a1) Celluloseesters und/oder Celluloseethers mit einem Gehalt von mindestens 0,1 Gew.-% an reaktiven Acryl- und/der Methacrylgruppen und einem mittleren Molekulargewicht ($\overline{M}_w$) zwischen 10.000 und 250.000 und einer Glasübergangstemperatur ($T_g$) $\geqq$ + 20 °C,

a2) einem Polyvinylalkoholderivat mit einem Gehalt von $\geqq$ 0,1 Gew.-% an reaktiven Acryl- und/oder Methacrylgruppen und mit einem mittleren Molekulargewicht ($\overline{M}_w$) zwischen 1.000 und 100.000 und einer Glasübergangstemperatur ($T_g$) $\geqq$ 20 °C und

a3) einem Phenol- oder Novolakderivat mit einem Gehalt von $\geqq$ 0,1 Gew.-% an reaktiven Acryl- und/oder Methacrylgruppen, mit einem mittleren Molekulargewicht ($\overline{M}_w$) zwischen 1.000 und 50.000 und einer Glasübergangstemperatur ($T_g$) von $\geqq$ -20 °C oder

(a) einem oder mehreren polymeriserbaren hydroxylgruppenhaltigen Polymeren aus der Gruppe eines

a1) Celluloseesters und/oder Celluloseethers mit einem Gehalt von mindestens 0,1 Gew.-% an reaktiven Acryl- und/oder Methacrylgruppen und einem mittleren Molekulargewicht ($\overline{M}_w$) zwischen 10.000 und 250.000 und einer Glasübergangstemperatur ($T_g$) $\geqq$ + 20 °C

a2) einem Polyvinylalkoholdervat mit einem Gehalt von $\geqq$ 0,1 Gew.-% an reaktiven Acryl- und/oder Methacrylgruppen und mit einem mittleren Molekulargewicht ($\overline{M}_w$) zwischen 1.000 und 100.000 und einer Glasübergangstemperatur ($T_g$) $\geqq$ + 20 °C und

a3) einem Phenol- oder Novolakderivat mit einem Gehalt von $\geqq$ 0,1 Gew.-% an reaktiven Acryl- und/oder Methacrylgruppen, mit einem mittleren Molekulargewicht ($\overline{M}_w$) zwischen 1.000 und 50.000 und einer Glasübergangstemperatur ($T_g$) von $\geqq$ -20 °C und

(b) einem oder mehreren linear unverzweigten und/oder verzweigten Polyestern und/oder Copolyestern mit einem Gehalt von $\geqq$ 0,1 Gew.-% an reaktiven Acryl- und/oder Merthacrylgruppen mit einem mittleren Molekulargewicht ($\overline{M}_w$) zwischen 1.000 und 20.000 und einer Glasübergangstemperatur im Bereich von -50 bis + 50 °C, wobei eine der Komponenten (b) ein hydroxylgruppentragender Basispolyester aus

b1) einem Hydroxylpolyester mit verzweigten, aus Polyestereinheiten bestehenden Ketten mit Verzweigungen an dritten und höheren polyesterbildenden Funktionen und/oder

b2) einem Hydroxylpolyester mit über Ester- oder Ethergruppen von dritten oder höheren polyesterbildenden Funktionen gebundenen Alkylseitenketten mit 2 bis 50 C-Atomen, insbesondere 4 bis 36 C-Atomen, in der Alkylgruppe ist und gegebenenfalls

(c) einem polymerisierbaren, ethylenisch ungesättigte Gruppen tragenden Oligomer aus Acryl-, Methacryl-, Ether-, Ester-, Urethan-, Amid-, Imid-, Epoxid-, Siloxan-, Phenol-, Novolak- und/oder Mercaptoverbindungen mit einem mittleren Molekulargewicht ($\overline{M}_w$) von 400 bis 10.000 und gegebenenfalls

(d) Füllstoffen, Pigmenten, Antioxidantien, Stabilisatoren, Verlaufs-, Netzmittel und Antischaummittel.

Die erfindungsgemäß zum Einsatz kommenden polymerisierbaren hydroxylgruppenhaltigen Polymere sind folgende ethylenisch ungesättigte, thermoplastische Polymere:

(a1) ein Celluloseester und/oder Celluloseether mit einem Gehalt von mindestens 0,1 Gew.-% an reaktiven Acryl- und/oder Methacrylgruppen, einem mittleren Molekulargewicht ($\overline{M}_w$) zwischen 10.000 und 250.000 und einer Glasübergangstemperatur ($T_g$) $\geqq$ +20 °C, vorzugsweise $\geqq$ +90 °C,

(a2) ein Polyvinylalkoholderivat mit einem Gehalt von $\geqq$ 0,1 Gew.-% an reaktiven Acryl- und/oder Methacrylgruppen, einem mittleren Molekulargewicht ($\overline{M}_w$) zwischen 1.000 und 100.000 und einer Glasübergangstemperatur ($T_g$) $\geqq$ +20 °C und

(a3) ein Phenol- oder Novolakderivat mit einem Gehalt von $\geqq$ 0,1 Gew.-% an reaktiven Acryl- und/oder Methacrylgruppen, mit einem mittleren Molekulargewicht ($\overline{M}_w$) zwischen 1.000 und 50.000 und einer Glasübergangstemperatur ($T_g$) von $\geqq$ -20 °C.

Die Schmelz- bzw. Erweichungspunkte der festen Polymere liegen $\geqq$ +70 °C. Der Gehalt an polymerisierbaren, ethylenisch ungesättigten Gruppen beträgt $\geqq$ 0,1, vorzugsweise $\geqq$ 0,5 Gew.-% . Die ethylenisch

ungesättigte Gruppe ist ein organischer Rest der allgemeinen Formel 1

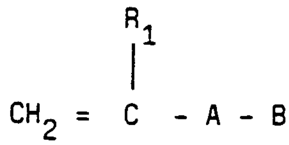

worin ist

$R_1$ = H, CN oder ein Alkylrest mit 1 - 4 C-Atomen,

A =

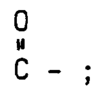

B = - O - ; - $(CH_2)_{n+1}$; $C_6H_5$; $C_6H_4$;
- O - ; - N - $R_2$-; - N - $R_2$-$C_6H_5$ - $R_3$ - , $R_2$ - NHCO - ;
- NH - $R_2$ - OH, - NH - $R_2$ - COO - ; - NH - CO - $R_2$ - ,
- NH - $R_2$ - O - $R_2$ ;

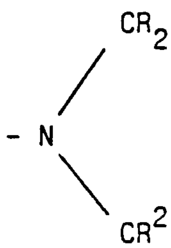 ; 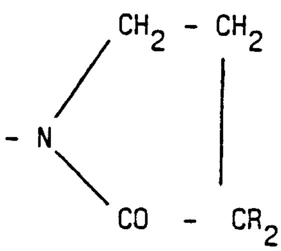 ; 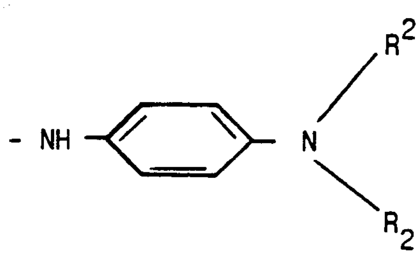

worin

$R_2$ = enständiges H, unverzweigte und verzweigte Acrylreste, Aralkylreste, cyclische Alkylreste und Acryle mit 1 bis 50 C-Atomen, vorzugsweise 1 bis 20,

$R_3$ = enständiges H, eine Alkylgruppe mit 1 bis 50 C-Atomen,

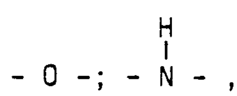

n = ist eine ganze Zahl von 0 bis 50, vorzugsweise 0 bis 10.

Die erfindungsgemäßen thermoplastischen Rückgratpolymeren für die erfindungsgemäßen Schmelzmassen sind Polymere und Copolymere aus

- Cellulose und Stärke, wie z.B. Celluloseether und -ester
- Polyvinylalkohole und deren Umwandlungsprodukte
- partiell verseifte Polyvinylacetate und deren Copolymere
- Polyester und Copolyester
- Phenol- und/oder Novolakderivate

mit einem Mindestgehalt an ethylenisch ungesättigten Gruppen von ≧ 0,1, vorzugsweise ≧ 0,2 Gew.-% und insebesondere ≧ 0,5 Gew.-%.

Die erfindungsgemäßen, thermoplastischen, polymerisierbaren Celluloseester und -ether sind Umsetzungsprodukte aus handelsüblichen Celluloseestern und -ethern mit einer Verbindung, die eine der obigen ethylenisch ungesättigten Gruppen trägt. Bei den handelsüblichen Celluloseestern handelt es sich vorzugsweise um Formiat-, Acetat-, Propionat-, Butyrat-, Capronat-, Stearatester oder Mischester aus mindestens 2

der dazugehörenden organischen Fettsäuren. Die Celluloseether dagegen können Alkyl-, Aralkyl- und Acryl-, Hydroxyalkyl-, Carboxyalkylether sein. Darüber hinaus sind auch Miscether und Mischester geeignet, wenn durch sie den erfindungsgemäßen Schmelzmassen eine spezifische Eigenschaft verliehen wird. Entscheidend ist, daß Celluloseester und -ether mit einer der vorstehend beschriebenen Acrylverbindung umsetzbar sind und einen Schmelzpunkt nach der Umsetzung von ≦ +300 °C, vorzugsweise ≦ +250 °C, insbesondere ≦ +200 °C aufweisen. Die Herstellung solcher polymerisierbarer, thermoplastischer Celluloseester und -ether ist u.a. in der Europäischen Patentanmeldung 0 146 277 und im Houben-Weyl **"Makromolekulare Stoffe"**, Teil 2, **"Umwandlung von Cellulose und Stärke"** 1963, S. 863 bis 915, beschrieben. Dort wird bereits auf Versuche hingewiesen, andere Monomere und Polymere auf das Cellulosemolekül aufzupfropfen, um neuartige Kunststoffe (S. 894) zu gewinnen. Das läßt sich z.B. durch Einführung polymerisierbarer Doppelbindungen in das Cellulosemolekül, z.B. Veretherung durch Allylchlorid, oder durch Radikalbildung im Cellulosemolekül, z.B. Ozonisierung oder Bestrahlung der Cellulose, erzielen. Zu den erfindungsgemäß einsetzbaren Cellulosepolymeren gehören auch die Stärkeester organischer Säuren, Alkylether und Aralkylether der Stärke. Die Alkylether der Stärke können zusätzliche funktionelle Gruppen tragen. Ein typischer Vertreter ist der Stärkeallylether, der mit anderen Allyl- und Vinylverbindungen polymerisiert werden kann, wobei man vernetzte Produkte erhält. Stärkeallylether sind als Lackrohstoffe bekannt und werden aus ihren Lösungen in inerten organischen Lösungsmitteln verarbeitet.

Der Einsatz dieser polymerisierbaren, thermoplastischen Umwandlungsprodukte aus Cellulose und Stärke hat auch einen volkswirtschaftlichen Aspekt. Denn die Cellulose- und Stärkeresourcen sind nicht so limitiert wie die Erdölresourcen auf dieser Welt, aus dem die Coreaktanten stammen, die zur Modifikation der Cellulose- und Stärkeausgangsprodukte benötigt werden. Darüber hinaus sind Cellulose und Stärke Naturprodukte und besitzen deshalb einen umweltfreundlicheren Aspekt.

Weitere geeignete polymerisierbare, thermoplastische, hydroxylgruppenhaltige Rückgratpolymere sind Polyvinylalkohole und die Umwandlungsprodukte, die man über Veretherung, Acetalisierung, Ketalisierung und Veresterung erzielt, und eine polymerisierbare Gruppe nach Formel 1 tragen. Auch über die Umesterung von Polyvinylestern lassen sich Rückgratpolymere herstellen, die u.U. bereits polymerisierbare, ethylenisch ungesättigte Gruppen tragen, wenn hierzu ungesättigte Carbonsäuren, wie z.B. Acrylsäure, Maleinsäure bzw. deren Anhydride, verwendet werden. Solche Verbindungen sind in der DE-AS 10 65 621 beschrieben.

Im Mittelpunkt stehen dabei neben den Acetalen und Butyralen die Alkylvinylether, wie z.B. Ethyl-, n-Butyl-, Isobutyl- und Octylvinylether, die sich u.a. durch energiereiche Strahlen polymerisieren lassen. Derartige Reaktionen werden von J.G. Fee et al im J. Polymer Sci 33, S. 95 (1958) bereits beschrieben.

Aber auch lichtvernetzende Umsetzungsprodukte von Polyvinylalkohol bzw. anderen Hydroxylgruppen enthaltenden Copolymerisaten mit Maleinsäureanhydrid, p-Aminozimtsäureester und dergl., sind aus der Patentliteratur bekannt und u.a. in US-PS 2 811 509 beschrieben.

Weitere besonders geeignete polymerisierbare, thermoplastische, hydroxylgruppenhaltige Rückgratpolymere sind Verbindungen aus der Gruppe der Phenole, Novolake und Resorzine, die eine polymerisierbare Gruppe nach Formel 1 tragen. Solche Verbindungen lassen sich u.a. über Bisphenol- und Novolakepoxide (vgl. z.B. H.G. Elias, Makromoleküle, Basel, Heidelberg, 1972, S. 707 bis 709) durch Umsetzung mit Acryl- oder Methacrylsäure herstellen. Aber auch Umsetzungen mit

a) Isocyanatoalkylacrylat oder -methacrylat;

b) Addukten aus Di-, Tri- oder Polyisocyanaten oder Isocyanatpräpolymeren mit niedrigem Molekulargewicht mit Hydroxyalkylacrylaten bzw. Hydroxyalkylmethacrylaten;

c) Glycidylacrylat oder Glycidylmethacrylat

führen zu Rückgratpolymeren, die eine polymerisierbare Gruppe nach Formel 1 tragen. Sie besitzen einen Gehalt an polymerisierbaren Gruppen von ≧ 0,1 Gew.-%, ein mittleres Molekulargewicht ($\overline{M}_w$) zwischen 1.000 und 50.000, vorzugsweise 1.000 und 10.000, insbesondere 1.000 bis 5.000 und haben eine Glasübergangstemperatur ($T_g$) von ≧ -20 °C.

Sie entsprechen in ihrer chemischen Struktur u.a. den allgemeinen Formeln 2 bis 4. Darüber hinaus sind auch solche Novolake geeignet, die durch Kondensation von Phenolen mit Acetaldehyd, Acetylen, Vinylether und/oder Furfurol gewonnen wurden und mindestens eine ethylenische ungesättigte Gruppe gemäß Formel 1 tragen.

Alle die hier beschriebenen und erfindungsgemäß polymerisierbaren Rückgratpolymere der Gruppen (a1) bis (a3) müssen thermoplastische Eigenschaften besitzen, damit sie in den erfindungsgemäßen Schmelzmassen einsetzbar sind. Die Schmelzpunkte liegen dabei ≦ +300 °C, vorzugsweise ≦ +250 °C, insbesondere ≦ +200 °C, und eventuelle Restmonomergehalte aus der Umsetzung mit einem ethylenisch ungesättigten Rest der vorstehenden Formel 1 liegen unter 0,01, vorzugsweise unter 0,001 Gew.-% und sind insbesondere frei von niedermolekularen ethylenisch ungesättigten Verbindungen mit einem Molgewicht ≦ 500, vorzugsweise ≦ 800.

Mit diesen Rückgratpolymeren werden insbesondere die Flexibilität (thoughness), die Chemikalien-, Wärme- und/oder Wasserbeständigkeit in den Endeigenschaften der gehärteten bzw. vernetzten erfindungsgemäßen Schmelzmassen bestimmt.

Die erfindungsgemäß einsetzbaren Komponenten (b) werden aus gesättigten, linearen oder verzweigten, thermoplastischen Polyestern und deren Copolymeren hergestellt. Hierbei handelt es sich um Umsetzungsprodukte aus bi- und multifunktionellen Alkoholen, wie z.B. Ethylenglykol, Neopentylglykol, Hexandiol1,6, Trimethylolpropan, mit aromatischen Säuren, z.B. Phthal-, Isophthal- und Terephthalsäuren, und gegebenenfalls einem Anteil an einkondensierten aliphatischen Dicarbonsäuren. Diesen Polyestern oder deren Copolymeren werden reaktive, polymerisierbare Gruppen nach Formel 1 aufgepfropft oder bei ihrer Herstellung in das entstehende Molekül mit einkondensiert. Der Gehalt an polymerisierbaren Gruppen liegt ≧ 0,1, vorzugweise ≧ 1,0, insbesondere ≧ 1,5 Gew.-%. Die mittleren Molekulargewichte liegen zwischen 1.000 und 20.000, insbesondere 1.000 und 10.000. Die Glasübergangstemperatur ist im Bereich von ≧ -50 , vorzugsweise ≧ -30 °C bis + 50 °C. Die polymerisierbaren Polyester und deren Copolymere können auch eine Hydroxylgruppenzahl zwischen 0,1 und 10 Gew.-% aufweisen. Des weiteren besitzen sie eine Säurezahl zwischen 0 und 100, vorzugsweise 0,1 bis 50, insbesondere 2 bis 20 mg KOH/pro Polyester bzw. Copolyester. Die im Molekül vorhandenen COOH-Gruppen besitzen die Funktion eines Adhäsionspromotoren, um die Schmelzmassenhaftung auf Metallsubstraten zu verbessern. Der Restmonomergehalt der Komponenten (b) liegt bei ≦ 0,1, vorzugsweise ≦ 0,05, insbesondere ≦ 0,01 Gew.-%. Die Schmelzpunkte liegen ≦ 250 °C, vorzugsweise ≦ +200 °C, insbesondere ≦ +150 °C. Die Herstellung der Basis-Polyester und -Copolyester ist in der Literatur hinreichend beschrieben, sowie deren Modifikation mit einem Rest der vorstehenden Formel. Siehe hierzu u.a. HOUBEN-WEYL, **"Makromolekulare Stoffe"**, Teil 2: **"Polycarbonsäureester"**, S. 1 bis 44, (1963).

Die polymerisierbaren Polyester und deren Copolymere können amorph, teilkristallin oder kristallin sein.

Die bevorzugten Ausgangspolyester sind erfindungsgemäß unvernetzt und weitgehend linear, d.h. aus unverzweigten Hauptketten mit vergleichsweise geringer, durch trifunktionelle Gliederung der Hauptketten bedingter Kettenverzweigung hergestellt, unabhängig davon, wie die Alkylseitenketten über Ester- und/oder Etherbindungen an die Hauptkette zu binden sind. Diese erfindungsgemäßen Polyester haben ganz oder überwiegend eine Art Kammstruktur, in der die Alkylseitenketten in regelmäßiger, statischer Anordnung aus der im wesentlichen linearen und unverzweigten Hauptkette der Polyester herausragen. Als Ausgangsstoffe kommen bekannte aliphatische Di-, Tri- und höhere Polycarbonsäuren, aromatische Di-, Tri- und Polycarbonsäuren, Dihydroxymonocarbonsäuren und Hydroxydicarbonsäuren sowie Mono- und Dialkylester der genannten Di- und höher funktionellen Carbonsäuren, Mono- bzw. Dicarbonsäureester von Diolen und höheren Polyolen bzw. Dimonocarbonsäureester und Mono- bzw. Dialkylester von Mono- bzw. Dialkylether von Diolen und höheren Polyolen sowie die Monocarbonsäuren und Monoalkanole selbst zum Einsatz.

In den bevorzugten Polyestern soll das Molverhältnis von Estersegmenten der Hauptkette zu Seitenketten 1 zu 0,02 bis 2,0, insbesondere 1,0 bis 0,05 bis 1,0 betragen. Die Glasübergangstemperaturen ($T_g$) dieser Polyester liegen im Bereich ≦ +50 °C, vorzugsweise ≦ +20 °C, insbesondere ≦ +10 °C. Die Viskositätswerte liegen bei 5 bis 10.000 Pa.s/120 °C. Bei diesen neuen Polyestern haben die Seitenketten einen besonderen Einfluß auf die Viskosität bzw. Schmelzviskosität. Denn bei nur geringer Temperaturerhöhung erfolgt eine erhebliche Viskositätsreduzierung. Die unerwartete starke Viskositätsreduzierung bei ansteigender Temperatur ist erfindungsgemäß eine wesentliche Voraussetzung dafür, wie überraschend gefunden wurde, um insbesondere die erfindungsgemäßen monomer- und additivfreien Schmelzmassen für den Lebensmittel- und Pharmabereich herstellen zu können.

Die Funktionalisierung der Polyester mit ethylenisch ungesättigten Gruppen gemäß Formel 1 erfolgt z.B. über Umsetzung von 10 bis 90 % der Hydroxyl- und/oder 10 bis 100 % der Carboxylgruppen im Polyester.

Besonders bevorzugt sind also als Polymer (b) ein hydroxlgruppentragender Basispolyester aus

- Hydroxylpolyester (b1) mit verzweigter, aus Polyestereinheiten bestehenden Ketten mit Verzweigungen an dritten und höheren polyesterbildenden Funktionen und/oder
- Hydroxylpolyester (b2) mit über Ester- oder Ethergruppen von dritten oder höheren polyesterbildenden Funktionen gebundenen Alkylseitenketten mit 2 bis 50 C-Atomen, insbesondere 4 bis 36 C-Atomen in der Alkylgruppe mit einem Gehalt von ≧ 0,1 Gew.-% an reaktiven Acryl- und/oder Methacrylgruppen, mit einem mittleren Molekulargewicht ($\overline{M}_w$) von 1.000 bis 20.000, insbesondere 1.000 bis 10.000 und einer Glasübergangstemperatur ($T_g$) ≦ +50 °C, insbesondere ≦ +20 °C.

Beim gemeinsamen Einsatz der Komponenten (a) und (b) in den erfindungsgemäßen Schmelzmassen betragen ihre Verhältnisse 99 : 1 bis 1 : 99, vorzugsweise 50 : 50, insbesondere 3 bis 35 : 97 bis 65 Gew.-%. Da die Komponenten (a) und (b) auch in sich selbst vernetzen können, spielen die Moläquivalente an

reaktivierbaren, polymerisierbaren Gruppen gemäß der Formel 1 eine partielle Rolle. In einer Reihe von Applikationsfällen, insbesondere beim korrosionsbeständigen und abrasionsfesten Ausrüsten von Stahl- oder Weißblechen, wird neben einer hohen Flexibilität (thoughness) auch eine optimale Metallhaftung gefordert. Diese Forderung gilt im besonderen Maße für solche polymerisierbaren Schmelzmassen, die ohne Additivzusätze zum korrosionsfesten Ausrüsten von Substraten für den Lebensmittel- und Pharmabereich dienen und auf nicht vorbehandelte Oberflächen aufgebracht werden. Analoge Probleme sind auch in technischen Einsatzbereichen gegeben, weil auch hier aus Kostengründen, wie z.B. im Fahrzeugbau, keine Oberflächenvorbehandlung und -entfettung vorgenommen werden kann. Um nun die vorstehenden und andere Forderungen erfüllen zu können, hat sich erfindungsgemäß ergeben, daß vorteilhafterweise die Rückgratpolymere (a) und (b) in einer Schmelzmasse vertreten sind. Während man mit den polymerisierbaren, hydroxylgruppenhaltigen Rückgratpolymeren, wie z.B. den Celluloseestern und -ethern, mit einem mittleren Molekulargewicht ($\overline{M}_w$) von ≧ 20.000, vorzugsweise ≧ 30.000, die Flexibilität und die Schlagzähigkeit beeinflussen und steuern kann, sind die polymerisierbaren, linearen unverzweigten und/oder verzweigten Polyester insbesondere die mit einer Säurezahl von ≧ 5 mg KOH/g, für die Metallhaftung und die Schlagfestigkeit verantwortlich. Da diese Aufgabe vorzgusweise nur mit relativ niedermolekularen Polyestern und deren Copolymeren lösbar ist, weil sie in ihrer Schmelze eine relativ niedere Viskosität besitzen, werden vorzugsweise solche mit mittleren Molekulargewichten ($\overline{M}_w$) von 1.000 bis 10.000, insbesondere 2.000 bis 6.000, eingesetzt. Diese niederen Schmelzviskositätswerte der Polyester und deren Copolymeren sind auch aus Gründen einer schnellen, vollflächigen Benetzung notwendig, weil sie neben den ins Molekül eingebauten Adhäsionspromotoren, z.B. Carboxylgruppen, für eine optimale Haftung mit verantwortlich sind. Diese Tatsache gilt insbesondere für Weißblech.

Die dabei bevorzugten Hydroxylgruppen tragenden Basispolyester und/oder Copolymere mit mittleren Molekulargewichten von 1.000 bis 20.000, insbesondere 1.000 bis 10.000 stammen aus der Gruppe der

- Hydroxylpolyester (b1) mit verzweigter, aus Polyestereinheiten bestehender Kette mit Verzweigungen an dritten und höheren Polyester bildenden Funktionen und/oder
- Hydroxylpolyester (b2) mit über Estergruppen oder Ethergruppen von dritten oder höheren Polyester bildenden Funktionen gebundenen Alkylseitenketten mit 2 bis 50 C-Atomen in den Alkylgruppen.

Die Komponenten (c) sind polymerisierbare, ethylenisch ungesättigte Gruppen tragende Oligomere aus Acryl-, Methacryl-, Ester-, Ether-, Urethan-, Amid-, Imid-, Epoxid-, Siloxan-, Phenol-, Novolak- und/oder Mercaptoverbindungen, die eine oder mehrere reaktive Gruppen gemäß der Formel 1 tragen. Die bevorzugte reaktive und der Polymerisation zugängliche Gruppe ist eine ungesättigte Vinyl-, insbesondere eine Acrylgruppe. Die Oligomere haben mittlere Molekulargewichte ($\overline{M}_w$) zwischen 400 und 10.000, vorzugsweise zwischen 800 und 6.000. Sie sind bei Raumtemperatur flüssig bis fest. Einige davon haben eine Art von **"teilkristallinen"** Eigenschaften, die ein Zeichen für besondere Reinheit sind und eine sehr enge Molekulargewichtsverteilung besitzen.

Die Funktion und Aufgabe der Komponente (c) in einer der erfindungsgemäßen Schmelzmassen ist

- als Quervernetzer
- als Adhäsionspromotor
- als Modifikator zur Verbesserung der rheologischen Eigenschaften, z.B. der Schmelz- bzw. der Verarbeitungsviskosität
- als Modifikator zur Verbesserung der Endeigenschaften der gehärteten Schmelzmassen
- zur Zähigkeits- bzw. Flexibilitätsvariation
- zur Verbesserung der Beständigkeit gegen Umwelteinflüsse, Chemikalien, Säuren, Salzen und dergleichen
- zur Verbesserung der Wärme- und Kältebeständigkeit.

Beispiele für die Komponente (c) sind u.a. ethylenisch ungesättigte Gruppen tragende Oligomere, wie z.B. reine Acrylate und/oder Methacrylate; Acryl- und/oder Methacrylsäureester; Polyesteracrylate und/oder -methacrylate; Polyetheracrylate und/oder -methacrylate; Epoxidacrrylate und/oder -methacrylate; Polyurethanacrylate und/oder -methacrylate; polyacrylierte und/oder polymethacrylierte Polyole, acrylierte und/oder methacrylierte Polytetrahydrofurane; acrylierte und/oder methacrylierte Phenole und Novolake und deren Derivate; acrylierte und/oder methacrylierte Polycarbonate; acrylierte und/oder methacrylierte Polyamide; acrylierte und/oder methacrylierte Polyimide; acrylierte und/oder methacrylierte Melaminharze; acrylierte und/oder methacrylierte Polysiloxane; acrylierte und/oder methacrylierte Polysulfide.

Des weiteren können erfindungsgemäß auch Polyester auf Fumar- und/oder Maleinsäurebasis, sowie acrylierte und/oder methacrylierte Diene, wie z.B. Polybutadien, eingesetzt werden. Aber auch fluorkohlenstoffsubstituierte, ethylenisch ungesättigte Gruppen tragende Oligomere, wie z.B. fluorkohlenstoffstubstituierte Polyetherurethanacrylate, sind zum Modifizieren der erfindungsgemäßen Schmelzmasse geeignet.

Besonders geeignet sind acrylierte und/oder methacrylierte Polyesterurethane, wie sie z.B. in der DE-OS 29 14 982 beschrieben sind. Diese acryl- oder methacrylgruppentragenden Polyesterurethane besitzen sehr enge Molekulargewichtsverteilung und infolge ihrer Reinheit und Monomerfreiheit können sie partiell kristallisieren. Die höheren molekularen Typen mit einem Molekulargewicht ≧ 1.200 besitzen bei Raumtemperatur eine wachsartige Struktur und Erweichungs- bzw-. Schmelzpunkte ≦ +100 °C. Mit ihnen lassen sich nicht nur die Schmelzviskositäten erniedrigen, sondern sie können die erfindungsgemäßen Schmelzmassen zusätzlich flexibilisieren.

Weitere besonders geeignete Oligomere sind die acrylierten und/oder methacrylierten Phenole, Novolake und deren Derivate der allgemeinen Formeln:

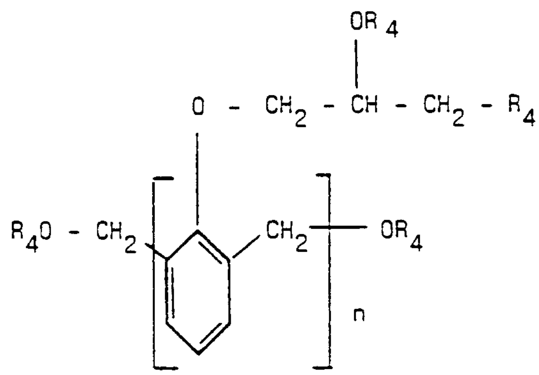

Formel 2

$R_4$ = endständiges H und/oder ein Rest gemäß Formel 1

n = eine ganze Zahl zwischen 2 und 20

Schema

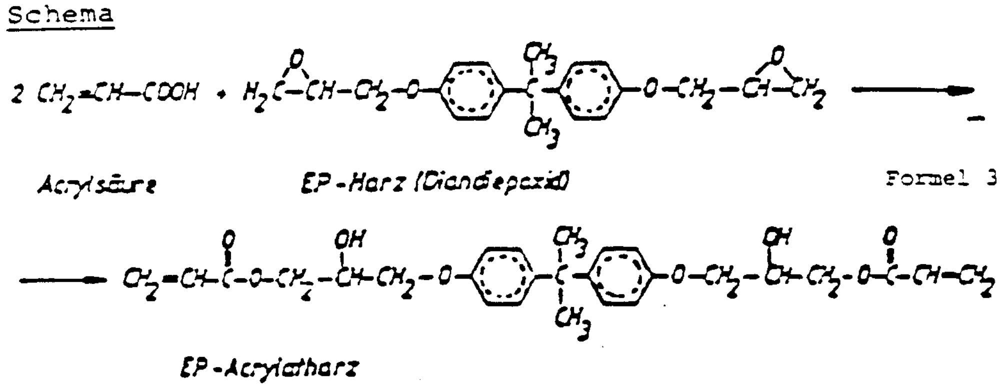


Formel 3

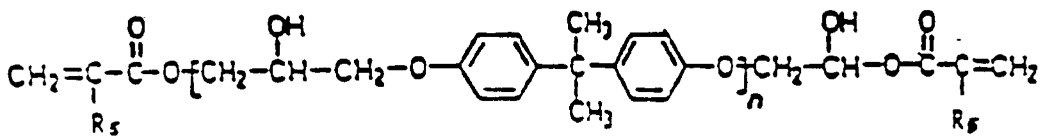

Formel 4

worin

$R_5$ ein endständiges H und/oder die Bedeutung von $R_1$ in Formel 1 hat,

n = eine ganze Zahl von 1 bis 2.

Mit diesen phenolgruppenhaltigen Verbindungen können erfindungsgemäß die Wärme-, die Sterilisations- und Chemikalienbeständigkeiten der erfindungsgemäßen Schmelzmassen reguliert werden, die vor allem bei den Packmitteln für den Lebensmittel- und Pharmabereich eine essentielle Rolle spielen.

Der Einsatz der Komponenten (c) ist von den jeweiligen Schmelz- und Verarbeitungstemperaturen der eingesetzten Rückgratpolymere abhängig. Durch ihren Zusatz kann die Schmelz- und Verarbeitungsviskosität der erfindungsgemäßen Schmelzmassen reduziert werden, sofern das Oligomer in diesem Temperaturbereich noch thermostabil ist.

Die Oligomere haben einen Restmonomerengehalt ≦ 0,5, vorzugsweise ≦ 0,05, insbesondere ≦ 0,01 Gew.-%.

Die Komponenten (d) sind bekannte übliche Zusätze. Hier sind zunächst einmal die Pigmente zu nennen, um den Schmelzmassen ein farbiges Aussehen zu verleihen. Unter dem Terminus **"Pigmente"**

werden ganz allgemein Farbstoffe, farbgebende Verbindungen, Füllstoffe und Extender aller Art verstanden, die den erfindungsgemäßen Schmelzmassen zusätzliche Festkörper liefern und sie auch bedruckbar machen. Gleichzeitig verleihen sie den Schmelzmassen eine Reihe von spezifischen Eigenschaften.

Beim Einsatz der Pigmente in Schmelzmassen, die später als Korrosionsschutzmittel im Lebensmittel- und Pharmabereich eingesetzt werden, müssen diese den jeweiligen lebensmittelrechtlichen Bestimmungen entsprechen. Die jeweiligen Eigenschaften und Funktionen sind im O.Lückert **"Pigment und Füllstoffe",** 2. Auflage, 1980, M. u. O. Lückert, Laatzen, zusammengefaßt. Der Gehalt an Pigmenten und Füllstoffen in den erfindungsgemäßen Schmelzmassen kann zwischen 1 und 80, vorzugsweise 10 bis 70, insbesondere 20 bis 60 Gew.-% - bezogen auf die Komponenten (a) und/oder (b) - liegen.

Für den Einsatz im technischen Bereich können den erfindungsgemäßen Schmelzmassen weitere Additive, wie z.B. Stabilisatoren, Antioxidantien, Verlauf- und Netzmittel zugesetzt werden. Die Additive sind in der Literatur hinreichend beschrieben, so daß auf das vorstehende Buch Gächter/Müller **"Kunststoff-Additive"**, 2. Ausgabe, Hanser Verlag, München, 1983, verwiesen werden kann.

Die Zusatzmengen liegen im allgemeinen zwischen 0,1 bis 5,0, vorzugsweise 0,1 bis 2,5 Gew.-%, bezogen auf die gebrauchsfertige Schmelzmasse.

Für den Lebensmittel- und Pharmabereich können nur solche Verlaufs- und Netzmittel eingesetzt werden, wenn sie mindestens eine polymerisierbare C-C-Doppel- und/oder Dreifachbindung im Molekül enthalten und damit in die gehärtete Schmelzmassenmatrix chemisch eingebunden werden. Als Beispiel für solche Netz- und Verlaufmittel sind u.a. oxyethylierte 2,4,7,9-Tetramethyl-5-decin-4,7-diol der allgemeinen Formel

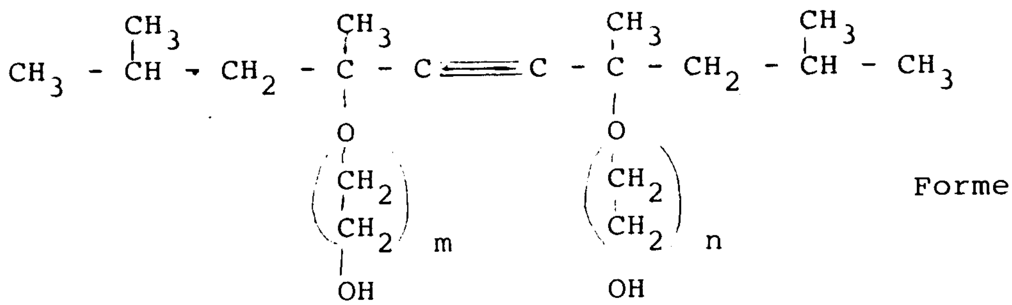

Formel 5

worin

m und n eine ganze Zahl zwischen 1 und 20 ist.

Auch die erfindungsgemäß eingesetzten Silikonacrylate aus der Gruppe der Komponenten (c) können die Funktion eines Verlaufs-, Netz- und/oder Antischaummittels übernehmen.

Ein weiterer Gegenstand der Erfindung ist die Herstellung der erfindungsgemäßen Schmelzmassen, insbesondere solcher, die für den Einsatz im Lebensmittel- und Pharmaziebereich bestimmt sind und deshalb keine Additive, wie Stabilisatoren und Antioxidantien, enthalten.

Besonders thermosensibel sind die polymerisierbaren, ungesättigten, ethylen- und hydroxylgruppenhaltigen Celluloseester und -ether aus der Gruppe der Komponenten (a). Diese Tatsache dürfte u.a. der Grund dafür sein, daß polymerisierbare Celluloseester in der europäischen Patentanmeldung 0 146 277 bei Temperaturen ≦ +120 °C und in der europäischen Patentanmeldung 0 184 349 ≦ +80 °C und in Gegenwart von inerten Lösungsmitteln umgesetzt werden. Des weiteren können die Celluloseester und -ether einen hohen anhaftenden Luftsauerstoffgehalt aufweisen. Da sie ohnehin als Thermoplaste thermosensibel sind, wird durch die Gegenwart von Luftsauerstoff die thermische Oxidation und damit die Degradation der Cellulosemoleküle begünstigt, wodurch relativ schnell Crackprodukte entstehen. Die Crackprodukte verfärben die Schmelzmassen nicht nur braun bis schwarz, sondern sie können auch physiologisch bedenklich sein. Deshalb hat die Aufbereitung der Rohstoffe zu den erfindungsgemäßen Schmelzmassen nicht nur unter einer Schutzgasatmosphäre zu erfolgen, sondern es hat sich auch als vorteilhaft erwiesen, wie überraschenderweise gefunden wurde, wenn die hydroxylgruppentragenden Rückgratpolymere

- zuvor mit einem Schutzgas gespült bzw. gewaschen werden und/oder
- in einer wäßrigen Suspension, eventuell unter Vakuum, entgast werden, um den Luftsauerstoff zu entfernen.

Bei einer Entgasung in einer wäßrigen Suspension hat in der ersten Phase des Aufschmelzprozesses eine Vortrockung bei einer Temperatur, die ca. 10 °C unter dem Schmelz- bzw. Erweichungspunkt des Rückgratpolymers liegt, zu erfolgen.

Demgegenüber sind im Vergleich die hydroxylgruppenhaltigen Polyvinylalkohol-, Phenol- und Novolakderivate, sowie die Polyester und deren Copolymere lange nicht so thermosensibel und thermooxidationsanfällig. Trotzdem sollte bei ihrer Aufbereitung eine analoge Sorgfalt aufgewendet werden, um zu polymerisierbaren Schmelzmassen zu gelangen, die frei von Crackprodukten sind. Jedoch kann vielfach auf eine Schutzgaswäsche und/oder eine Vakuum-Entgasung verzichtet werden, weil sie entgast bereitgestellt werden.

Bevor die hydroxylgruppenhaltigen Rückgratpolymere in die sogenannte Hauptschmelzphase gelangen, werden sie auf ihren Schmelz- bzw. Erweichungspunkt vorgewärmt. Anschließend wird die Temperatur zur schnellen, homogenen Aufschmelzung um +20 bis +60 °C über den Schmelz- bzw. Erweichungspunkt gesteigert. Sobald die Schmelze homogen und frei von Stippen ist, werden die Komponenten gegebenenfalls (b) und (c) zugesetzt. Die Komponenten sind ebenfalls auf Temperaturen vorgetempert, die mindestens dem Schmelz- bzw. Erweichungspunkt der hydroxylgruppenhaltigen Rückgratpolymere entsprechen. Eine tiefere Temperatur würde vor allem bei der kontinuierlichen Aufbereitung zusätzliche Probleme schaffen, wenn durch Abkühlung die Viskosität und damit der Scherwiderstand in der aufzubereitenden Schmelzmasse ansteigt, wodurch eine Degradation eintreten kann. Auch zur Einarbeitung der Komponenten (d) sind dieselben vorzuwärmen. Beim Einsatz von anorganischen Pigmenten und Füllstoffen können dieselben sogar auf die Aufbereitungstemperatur vorgetempert werden, damit sie sich schnell und problemlos eindispergieren lassen. Zum Schluß erfolgt eine Entgasung mittels Vakuum (bis zu $10^{-1}$ Torr). Die aufbereitete Schmelzmasse kann im in-line-Verfahren gleich zur Weiterverarbeitung gelangen oder im off-line-Verfahren wird schnell abgekühlt und gegebenenfalls in Granulat übergeführt.

Um eine thermische Oxidation auszuschließen, wird unter einer Schutzgasatmosphäre aufbereitet. Als Schutzgas sind Stickstoff ($N_2$), Kohlendioxid ($CO_2$) und dergleichen geeignet.

**Kontinuierliche Aufbereitung**

Die kontinuierliche Aufbereitung der Rohstoffe zur Herstellung der erfindungsgemäßen Schmelzmassen erfolgt in einem Ein- oder Mehrschneckenextruder. Dabei werden die Komponenten (a) - möglichst vorgewärmt - als erste Rohstoffe dem Extruder zugeführt. Die Komponenten (b) und (c) werden gegebenenfalls aufgeschmolzen bzw. vorgewärmt den aufgeschmolzenen Schmelzmassen zugesetzt. Sind darüber hinaus noch Zusätze der Komponenten (d) erforderlich, so werden diese ebenfalls vorgewärmt und im letzten Mischteil des Extruders eingearbeitet. Die Aufbereitungstemperaturen und -zeiten werden weitestgehend von den Erweichungs- und Schmelzpunkten der eingesetzten Rohstoffe bestimmt. Die Dosierung der einzelnen Rohstoffe oder Gemische/Gemenge aus denselben können bei Feststoffen über Gewicht- und Gravimetrie-Dosiervorrichtungen und bei Flüssigkeiten über Dosierpumpen erfolgen. Der gesamte Prozeß wird vorteilhafterweise über einen Mikroprozessor gesteuert. Die Mischzeiten sollten jedoch $\leqq 10$, vorzugsweise $\leqq 5$ Minuten liegen, um einen thermischen Abbau auszuschließen. Die Aufbereitung kann gegebenenfalls unter einer Schutzgasatmosphäre erfolgen. Die Aufbereitung der Rohstoffe für die erfindundungsgemäßen additiv- und monomerfreien Schmelzmassen für den Lebensmittel- und Pharmabereich sollte grundsätzlich unter Schutzgasatmosphäre in einem kontinuierlich arbeitenden Extruder erfolgen, um eventuelle thermische Schädigungen äußerst gering zu halten. Um sehr kurze Mischzeiten zu erreichen, sind hierfür die sogenannten Ko-Kneter besonders geeignet.

Die homogene, heiße Schmelzmasse kann nach einer eventuell notwendigen Vakuumentgasung entweder

- direkt zum Beschichtungs- bzw. Auftragswerk gepumpt oder
- gekühlt und granuliert oder in Fässer abgefüllt werden.

**Diskontinuierliche Aufbereitung**

Eine diskontinuierliche Aufbereitung der Rohstoffe zur Herstellung der erfindungsgemäßen Schmelzmassen kann

- in einem Schmelzkneter mit zwei Z-Mischarmen als Mischwerkzeug und einer Austragsschnecke und
- für nieder- bis mittelviskose Produkte in einem Schmelzdissolver erfolgen. Beide Mischvorrichtungen sind beheizbar und mit einer Vakuumanlage zur Schmelzmassenentgasung verbunden.

Auch hier werden die Komponenten (a) und gegebenenfalls (b) im Schmelzkneter vorgelegt. Sobald diese Komponenten aufbereitet sind, werden die restlichen Feststoffe, gegebenenfalls vorgewärmt, zugesetzt. Zum Schluß werden die flüssigen Zusätze homogen eingearbeitet. Danach wird die Schmelzmasse im Vakuum entgast. Anschließend kann die Schmelzmasse wie beim kontinuierlichen Prozeß weiter verarbeitet werden.

Das eventuelle Granulieren im off-line-Betrieb erfolgt egegebenenfalls über die Herstellung von Strängen durch Kühlen und anschließendem Zerhacken der gekühlten Stränge.

Die erfindungsgemäßen polymerisierbaren Schmelzmassen sind zum korrosionsbeständigen, abrasionsfesten und/oder zur Ausbildung eines Schutzfilmes mit Barriereeigenschaften von folgenden flächigen Substraten und Formkörpern geeignet:

a) **Metalle,** wie z.B. Stahlbleche aller Art, Weißbleche, Aluminiumbleche und -folien, Kupferbleche und -folien

b) **Cellulosematerialien,** wie z.B. Papiere, Karton und Pappe aller Art, Holzspan- und Holzfaserplatten, Sperrholz, Holzbretter

c) **Kunststoffe,** wie z.B. Folien und Platten aus Polyvinylalkohol, Polyethylen, Polypropylen, Polycarbonat, Polyvinylhalogenid, Polyester, Polyamid und deren Copolymere, sowie Faserverbundwerkstoffe aus Thermo- und Duroplasten

d) **Anorganische Materialien,** zement- und gipsgebundene Platten einschließlich Faserverbundplatten, Glas.

Diese Substrate sollen nur verdeutlichen, daß mit den erfindungsgemäßen, polymerisierbaren Schmelzmassen eine Vielzahl von Materialien korrosionsbeständig, abrasionsfest und/oder mit einem Barriereschutzfilm ausgerüstet werden können, ohne auf sie beschränkt zu sein.

In vielen Branchen der gewerblichen Wirtschaft und der Industrie werden solche und andere Substrate verarbeitet und sind korrosionsbeständig, abrasionsfest und/oder mit einem Barriereschutzfilm auszurüsten. Dazu gehören u.a. die Packmittel- und Verpackungsindustrie, der Fahrzeug-, Flugzeug- und Schiffsbau, die holzverarbeitende Industrie und die Hersteller von Fassadenplatten.

Besondere Einsatzgebiete für die additiv-, monomerfreien bzw. -armen, polymerisierbaren Schmelzmassen sind die Packmittel- und Verpackungsbereiche für Lebensmittel und Pharmaerzeugnisse. Um für diese Anwendungsgebiete zukünftig Pack- und Verpackungsmittel bereitstellen zu können, müssen diese nicht nur unter verschärften gesetzlichen Auflagen hergestellt werden können, sondern sie müssen auch in ihrem physiologischen und sensorischen Verhalten den erhöhten Anforderungen der Lebensmittel- und Pharmagesetzgebung entsprechen. Um dieses Ziel zu erreichen, sind neue Beschichtungsmassen notwendig, die nach einer anderen Technologie hergestellt und verarbeitet werden. Dieses Ziel läßt sich mit den erfindungsgemäßen, lösungsmittel-, additiv- und monomerfreien, polymerisierbaren Schmelzmassen auch für den Packmittel- und Verpackungsbereich erreichen.

Die Härtung bzw. Polymerisation selbst der erfindungsgemäßen polymerisierbaren Schmelzmassen erfolgt über:

- freiradikalische Polymerisation in Gegenwart von Reaktionsinitiatoren aus Peroxiden, z.B. Benzoylperoxid, Hydroperoxiden, z.B. Cumolhydroperoxid und vielen anderen mehr;
- aktinisches Licht, isnbesondere UV-Strahlen im Wellenlängenbereich 380 bis 100 nm in Gegenwart von Photoinitiatoren, wie z.B. Benzophenon, Benzoinether, Michlers Keton, Methylthioxanthon, Ketale, und gegebenenfalls weiteren Synergisten, wie z.B. Aminen, tert. Aminoalkoholen und/oder
- mittels Elektronenstrahlen im niederenergetischen Beschleunigungsbereich von 150 bis 300 keV und einer bevorzugten, wirksamen Eindringtiefe von 3 bis 400 $g/m^2$, sowie einer Dosenverteilung von 0,5 bis 10 Mrad, insbesondere 1,0 bis 6,0 und einer Dosisstreuung von ca. ± 3 %.

Anhand von nachfolgenden Beispielen wird die Erfindung näher erläutert, ohne auf diese beschränkt zu sein.

Die vorzugsweise eingesetzten Rückgratpolymere sind in den Tabellen 1 und 2 zusammengefaßt.

**Beispiel 1**

40 Gew.-Teile des Celluloseesters Nr. 3 werden in einem doppelwandigen Schmelzkneter mit zwei Z-Knetarmen vorgelegt. Der Kneter wird geschlossen und der Mischraum und der Cellulosester 2 Minuten mit Stickstoffgas gespült. Anschließend wird der Schmelzkneter auf +145 °C erwärmt und der Celluloseester solange geknetet, bis er eine homogene, weiche Masse bildet. Dieser Schmelzmasse werden jetzt 60 Gew.-Teile des vorgeschmolzenen Copolyesters Nr. 1 (145 °C) zugesetzt und dieselbe bei dieser Temperatur homogen eingearbeitet. Die Masse wird zum Schluß mit einem Vakuum von -0,5 bar entgast.

**Beispiel 2**

5 Gew.-Teile des Celluloseesters Nr. 1 werden in 50 Gew.-Teilen Wasser suspendiert und dann ein Vakuum von -0,8 bar angelegt, um den anhaftenden Luftsauerstoff zu entfernen. Anschließend wird das Wasser mittels einer Nutsche vom Celluloseester abgetrennt. Die feuchten Celluloseesterpartikel werden

nun in den auf +250 °C vorgewärmten Schmelzkneter gegeben und dort kurz getrocknet. Anschließend wird der Mischraum mit Stickstoffgas gespült und in dieser Schutzgasatmosphäre der Cellouloseester plastifiziert. In diese plastische heiße Schmelzmasse werden 95 Gew.-Teile des vorgewärmten Celluloseesters Nr. 4 homogen eingearbeitet und gleichzeitig die Ölbadtemperatur auf +180 °C gesenkt, um eine Produkttemperatur von etwa +160 °C zu erzielen. Sobald eine homogene Schmelzmasse erzielt ist, wird diese im Vakuum bei -0,1 bar entgast.

**Beispiel 3**

70 Gew.-Teile eines acrylierten Polyesterurethans, bestehend aus 1 Mol Hydroxyethylacrylat, 6 Mol epsilon-Caprolacton und 0,33 Mol Hexamethylendiisocyanid, Molekulargewicht 1.800, Schmelzpunkt + 52 °C, werden in einem ölbadbeheizten Doppelmantelgefäß, mit Rührdissolver ausgerüstet, auf 130 °C erwärmt. Danach werden unter laufendem Dissolver (5.000 Upm) 30 Gew.-Teile Celluloseester Nr. 6 (vorgewärmt auf +110 °C im Trockenschrank) eindispergiert und solange mit dem Dissolver behandelt, bis alle Cellulosepartikel gelöst waren. Während der Abkühlung der Schmelze wurde sie mit Vakuum (-0,5 bar) entgast.

**Beispiel 4**

60 Geb.-Teile acrylierter Novolak mit einem Molekulargewicht 2100, einem Schmelzpunkt von +105 °C und einem Acrylgruppengehalt von 0,5 %, werden bei +150 °C in einem in Beispiel 3 beschriebenen Schmelzdissolver geschmolzen. Sobald die Masse homogen aufgeschmolzen ist und die Temperatur von +150 °C erreicht hat, werden 40 Gew.-Teile des vorgewärmten Celluloseesters Nr. 7 eindispergiert. Nach dem Lösen der Cellulosepartikel wird die Schmelze mit Vakuum, (-0,5 bar) entgast.

**Beispiel 5**

Nach derselben Verfahrensart wie in den Beispielen 3 und 4 beschrieben, wurden 40 Gew.-Teile eines acrylierten Novolaks, Molekulargewicht 1700, Schmelzpunkt +92 °C und 0,4 % Doppelbindungen bei 120 °C geschmolzen und bei dieser Temperatur 60 Gew.-Teile des auf +120 °C vorgewärmten Copolyester Nr. 4 zugesetzt, homogen vermischt und im Vakuum entgast.

**Beispiel 6**

Nach einer der Verfahrensarten der Beispiele 1 bis 4 wurden die Copolyester Nr. 1 und 4 gemeinsam bei + 120 °C aufgeschmolzen und entgast.

In den folgenden **Beispielen 7 bis 20** (Tabelle 3) werden erfindungsgemäße Schmelzmassen aus Polymer (a) gegebenenfalls Polymer (b) und/oder Oligomer (c) beschrieben. Die Aufbereitung der einzelnen Rohstoffe erfolgte nach einer der in den Beispielen 1 bis 6 beschriebenen Verfahrenstechnik.

**Beispiel 21**

80 Gew.-Teile der Schmelzmasse aus Beispiel 1 werden bei +150 °C in einem Schmelzkneter mit zwei Z-Knetarmen geschmolzen und dann 20 Gew. -Teile auf +100° C vorgewärmtes Titandioxid (0,1 bis 0,3 Mikron) homogen eingearbeitet und zum Schluß wurde die gefüllte Schmelzmasse bei -0,5 bar entgast. Der Mischprozeß erfolgte unter einer Schutzgasatmosphäre mit Stickstoff.

Die nach der Polymersation erzielbaren Ergebnisse sind in Tabelle 4 zusammengefaßt.

**Liste von geeigneten polymerisierbaren Celluloseestern**

**Physikalische Daten**

| | Molekulargewicht | | Tg | Schmelzpunkt | Gehalt an ethylenisch ungesättigten Gruppen | OH-Zahl |
|---|---|---|---|---|---|---|
| | $\bar{M}_w$ | $\bar{M}_w/M_n$ | °C | °C | Gew.-% | Gew.-% |
| Celluloseester 1 | 250.000 | 16,7 | 174 | 240-260 | 0,1 | 3,2 |
| Celluloseester 2 | 65.000 | 3,1 | 181 | 270-280 | 0,2 | 3,2 |
| Celluloseester 3 | 36.000 | 4,5 | 95 | 110-125 | 0,8 | 1,1 |
| Celluloseester 4 | 185.000 | 18,5 | 118 | 155-165 | 0,6 | 1,4 |
| Celluloseester 5 | 43.000 | 2,2 | 137 | 188-210 | 3,0 | 2,8 |
| Celluloseester 6 | 61.000 | 2,8 | 118 | 150-160 | 3,0 | 3,8 |
| Celluloseester 7 | 52.000 | 2,5 | 131 | 180-200 | 1,2 | 2,8 |

**Tabelle 1**

| | Molekulargewicht | | $T_g$ | SZ | OHZ | Viskosität/120°C | Gehalt an ethylenisch ungesättigten Gruppen |
|---|---|---|---|---|---|---|---|
| | $M_w$ | $M_w/M_n$ | °C | mg KOH/g | | Pa.s | % |
| Copolyester Nr. 1 | 2.000 | 2,9 | -10 | 8 | 9 | 8 | 1,8 |
| Copolyester Nr. 2 | 4.000 | 3,5 | +10 | 6 | 7 | 14 | 1,4 |
| Copolyester Nr. 3 | 3.000 | 3,2 | +10 | 6 | 8 | 13 | 1,6 |
| Copolyester Nr. 4 | 18.000 | 4,2 | +20 | 0 | 4 | 330 | 0,8 |
| Copolyester Nr. 5 | 6.000 | 2,8 | +20 | 5 | 8 | 20 | 1,5 |
| Copolyester Nr. 6 | 27.000 | 3,8 | +10 | 7 | 1 | 72 | 1,0 |

Tabelle 2: Copolyester

## Tabelle 3

| Rohstoffe | Beispiele Nr./Gewichtsteile 7 | 8 | 9 | 10 | 11 | 12 | 13 | 14 | 15 | 16 | 17 | 18 | 19 | 20 |
|---|---|---|---|---|---|---|---|---|---|---|---|---|---|---|
| **Polymer A** | | | | | | | | | | | | | | |
| Celluloseester 1 | 2 | – | – | – | – | – | – | – | – | – | – | – | – | – |
| Celluloseester 2 | – | – | 3 | – | – | – | – | – | – | – | – | – | – | – |
| Celluloseester 3 | 8 | 10 | – | 25 | – | 25 | – | – | 5 | – | – | 60 | 30 | 32 |
| Celluloseester 4 | – | – | 7 | 10 | 5 | – | – | – | – | – | – | – | – | – |
| Celluloseester 5 | – | – | – | – | 15 | – | – | – | – | – | – | – | – | – |
| Celluloseester 6 | – | – | – | – | – | 15 | – | – | – | 30 | – | – | – | – |
| Celluloseester 7 | – | – | – | – | – | – | 20 | – | – | – | 55 | – | – | – |
| Polyvinylalkohol MG 18 000, 0,3% Acrylgruppen | – | 10 | – | – | 5 | – | | – | 5 | – | – | – | – | – |
| Novolakacrylat MG 1500 | 10 | – | – | – | – | 20 | – | 20 | 50 | – | – | – | – | – |
| **Polymer B** | | | | | | | | | | | | | | |
| Copolyester 1 | 80 | – | – | – | – | – | 60 | – | – | – | – | – | – | 48 |
| Copolyester 2 | – | 80 | – | – | – | – | – | – | – | – | – | – | – | – |
| Copolyester 3 | – | – | 90 | – | – | – | – | 80 | – | – | – | – | – | |
| Copolyester 4 | – | – | – | – | 70 | – | – | – | 15 | – | – | – | – | |
| Copolyester 5 | – | – | – | 65 | – | – | – | – | – | – | – | – | – | – |
| Copolyester 6 | – | – | – | – | – | 30 | – | – | – | – | – | – | – | – |
| **Oligomer C** | | | | | | | | | | | | | | |
| Bisphenol-A-diacrylat | – | – | – | – | – | – | – | – | – | – | 45 | – | – | – |
| Silikonacrylat MG 1200, 1,2% Acrylgruppen | – | – | – | – | 5 | – | – | – | 25 | – | – | – | – | – |
| **Oligomer C** | | | | | | | | | | | | | | |
| Polyesterurethan gemäß Beispiel 3 | – | – | – | – | – | 10 | 20 | – | – | 60 | – | 30 | – | – |
| Polyimidacrylat MG 900 | – | – | – | – | – | – | – | – | – | – | – | 10 | – | – |
| Polyamidacrylat MG 1100 | – | – | – | – | – | – | – | – | – | – | – | – | 20 | – |
| Polyetheracrylat MG 700 | – | – | – | – | – | – | – | – | – | – | – | – | 50 | – |
| Mercaptoacrylat MG 1600 | – | – | – | – | – | – | – | – | – | 10 | – | – | – | – |
| Titandioxid | – | – | – | – | – | – | – | – | – | – | – | – | – | 20 |

| Schmelzmasse Nr. | Substrat | Auftragsgewicht g/m² | Applikationstemperatur °C | Härtungsart | Haftung/Gitterschnitt-Test mit Klebeband 20°C | nach Sterilisation |
|---|---|---|---|---|---|---|
| 1 | Alu | 8<br>5 | 100<br>180 | ESH 6 Mrad | gut<br>sehr gut | gut<br>sehr gut |
| 2 | Alu<br>Stahl | 5 | 180 | ESH 6 Mrad | sehr gut<br>sehr gut | sehr gut<br>sehr gut |
| 3 | Alu | 3 | 150 | ESH 6 Mrad<br>UV | sehr gut<br>gut | sehr gut<br>gut |
| 4 | Alu | 8 | 220 | ESH 6 Mrad | gut | sehr gut |
| 5 | Stahl | 6 | 200 | ESH 5 Mrad | sehr gut | sehr gut |
| ~~6~~ 7 | Weißblech | 4 | 180 | ESH 4 Mrad | sehr gut | sehr gut |
| 7 8 | Papier | 3 | 140 | UV | gut | gut |
| 8 | Papier | 5 | 160 | FRH | gut | gut |
| 9 | Alu<br>Weißblech | 4 | 180 | ESH 3 Mrad | sehr gut<br>gut | sehr gut<br>gut |
| 10 | Stahl | 7 | 130 | FRH | gut | befriedigend |
| 11 | Weißblech | 6 | 180 | UV | gut | befriedigend |
| 12 | Alu<br>Weißblech | 5 | 185 | ESH 5 Mrad | sehr gut<br>sehr gut | sehr gut<br>sehr gut |
| 13 | Stahl | 9 | 120 | ESH 6 Mrad | gut | sehr gut |
| 14 | Weißblech | 5 | 150 | ESH 4 Mrad | sehr gut | sehr gut |
| 15 | Alu<br>Weißblech | 5 | 170 | ESH 4 Mrad | gut<br>befriedigend | gut<br>ungenügend |
| 16 | PVC | 3 | 120 | ESH 3 Mrad | gut | sehr gut |
| 17 | Alu<br>PVC | 4 | 160<br>120 | ESH 3 Mrad | gut<br>gut | sehr gut<br>gut |
| 18 | Stahl | 5 | 190 | UV | gut | befriedigend |
| 19 | Stahl | 5 | 185 | ESH 4 Mrad<br>UV | sehr gut<br>befriedigend | sehr gut<br>ungenügend |
| 20 | Alu<br>Weißblech | 6 | 180 | ESH 6 Mrad | sehr gut | sehr gut |

Tabelle 4

## Patentansprüche

**1.** Lösungsmittelfreie, monomerarme bzw. -freie polymerisierbare Schmelzmassen zur Ausbildung von korrosionsbeständigen, abrasionsfesten Beschichtungen und/oder zur Ausbildung eines Schutzfilmes mit Barriereeigenschaften auf flächigen Substraten und Formkörpern aus Metall, Kunststoff, Cellulose-Materialien und/oder anorganischen Materialien, insbesondere solchen für Verpackungszwecke, bestehend aus

(a) einem oder mehreren polymerisierbaren hydroxylgruppenhaltigen Polymeren aus der Gruppe eines

a1) Celluloseesters und/oder Celluloseethers mit einem Gehalt von mindestens 0,1 Gew.-% an reaktiven Acryl- und/der Methacrylgruppen und einem mittleren Molekulargewicht ($\overline{M}_w$) zwischen 10.000 und 250.000 und einer Glasübergangstemperatur ($T_g$) ≧ + 20 °C,

a2) eines Polyvinylalkoholderivats mit einem Gehalt von ≧ 0,1 Gew.-% an reaktiven Acryl- und/oder Methacrylgruppen und mit einem mittleren Molekulargewicht ($\overline{M}_w$) zwischen 1.000 und 100.000 und einer Glasübergangstemperatur ($T_g$) ≧ 20 °C und

a3) eines Phenol- oder Novolakderivats mit einem Gehalt von > 0,1 Gew.-% an reaktiven Acryl- und/oder Methacrylgruppen, mit einem mittleren Molekulargewicht ($\overline{M}_w$) zwischen 1.000 und 50.000 und einer Glasübergangstemperatur ($T_g$) von ≧ -20 °C oder

a) einem oder mehreren polymerisierbaren hydroxylgruppenhaltigen Polymeren aus der Gruppe eines

a1) Celluloseesters und/oder Celluloseethers mit einem Gehalt von mindestens 0,1 Gew.-% an reaktiven Acryl- und/oder Methacrylgruppen und einem mittleren Molekulargewicht ($\overline{M}_w$) zwischen 10.000 und 250.000 und einer Glasübergangstemperatur ($T_g$) ≧ + 20 °C

a2) eines Polyvinylalkoholderivats mit einem Gehalt von ≧ 0,1 Gew.-% an reaktiven Acryl- und/oder Methacrylgruppen und mit einem mittleren Molekulargewicht ($\overline{M}_w$) zwischen 1.000 und 100.000 und einer Glasübergangstemperatur ($T_g$) ≧ + 20 °C und

a3) eines Phenol- oder Novolakderivats mit einem Gehalt von ≧ 0,1 Gew.-% an reaktiven Acryl- und/oder Methacrylgruppen, mit einem mittleren Molekulargewicht ($\overline{M}_w$) zwischen 1.000 und 50.000 und einer Glasübergangstemperatur ($T_g$) von ≧ -20 °C und

b) einem oder mehreren linear unverzweigten und/oder verzweigten Polyestern und/oder Copolyestern mit einem Gehalt von ≧ 0,1 Gew.-% an reaktiven Acryl- und/oder Methacrylgruppen mit einem mittleren Molekulargewicht ($\overline{M}_w$) zwischen 1.000 und 20.000 und einer Glasübergangstemperatur im Bereich von -50 bis + 50 °C, wobei (b) ein hydroxylgruppentragender Basispolyester aus

b1) einem Hydroxylpolyester mit verzweigten, aus Polyestereinheiten bestehenden Ketten mit Verzweigungen an dritten und höheren polyesterbildenden Funktionen und/oder

b2) einem Hydroxylpolyester mit über Ester- oder Ethergruppen von dritten oder höheren polyesterbildenden Funktionen gebundenen Alkylseitenketten mit 2 bis 50 C-Atomen, insbesondere 4 bis 36 C-Atomen, in der Alkylgruppe ist und gegebenenfalls

c) einem polymerisierbaren, ethylenisch ungesättigte Gruppen tragenden Oligomer aus Acryl-, Methacryl-, Ether-, Ester-, Urethan-, Amid-, Imid-, Epoxid-, Siloxan-, Phenol-, Novolak- und/oder Mercaptoverbindungen mit einem mittleren Molekulargewicht ($\overline{M}_w$) von 400 bis 10.000 und gegebenenfalls

d) Füllstoffen, Pigmenten, Antioxidantien, Stabilisatoren, Verlaufs-, Netzmittel und Antischaummittel.

**2.** Schmelzmasse nach Anspruch 1, dadurch gekennzeichnet, daß der Polyester der Komponente (b) ein Molekulargewicht im Bereich von 1.000 bis 10.000 aufweist.

**3.** Schmelzmasse nach Anspruch 1 oder 2, dadurch gekennzeichnet, daß in der Komponente (b) der Polyester eine Glasübergangstemperatur im Bereich von -50 bis +20 °C aufweist.

**4.** Verfahren zur Herstellung der Schmelzmasse nach einem der Ansprüche 1 bis 3, dadurch gekennzeichnet, daß man die Komponente (a) auf ihren Schmelzpunkt vorwärmt, um +20 bis +60 °C über den Schmelzpunkt erhitzt, gegebenenfalls die Komponente (b) sowie gegebenenfalls (c) und/oder (d) unter einer Schutzgasatmosphäre zusetzt, wobei die Komponenten (b) bzw. (c) ebenfalls auf Temperaturen vorerhitzt werden, die mindestens dem Schmelzpunkt der Komponente (a) entsprechen, und anschließend die so aufbereitete Schmelzmasse entgast.

**5.** Verfahren nach Anspruch 4, dadurch gekennzeichnet, daß man die Komponente (a) vor der Vorwärmung auf ihren Schmelzpunkt in an sich bekannter Weise mit einem Schutzgas spült bzw. wäscht und/oder in einer wäßrigen Suspension, vorzugsweise unter Vakuum, entgast.

**6.** Verfahren nach Anspruch 4 oder 5, dadurch gekennzeichnet, daß man die Komponente (d) im vorgewärmten Zustand zusetzt.

**7.** Verfahren nach den Ansprüchen 4 bis 6, dadurch gekennzeichnet, daß vor der Entgasung der wäßrigen Suspension in der wäßrigen Phase eine Vortrocknung bei einer Temperatur von ca. 10 °C unter dem Schmelzpunkt der Komponente (a) erfolgt.

**8.** Verfahren nach einem der Ansprüche 4 bis 7, dadurch gekennzeichnet, daß die Schlußentgasung bei einem Vakuum bis zu $10^{-1}$ Torr erfolgt.

**9.** Verfahren nach einem der Ansprüche 4 bis 8, dadurch gekennzeichnet, daß die Schmelzmasse schnell abgekühlt und gegebenenfalls granuliert wird.

10. Verfahren nach einem der Ansprüche 4 bis 9, dadurch gekennzeichnet, daß man als Schutzgas Stickstoff, Kohlendioxid oder ein Edelgas einsetzt.

**Claims**

1. Solvent-free, low in monomer or rather monomer-free polymerizable melting masses for producing corrosion-resistant, abrasion-proof coatings and/or for producing a protective film having barrier characteristics on sheet substrates and moulded bodies comprising metal, synthetic material, cellulose material and/or anorganic materials, in particular such items intended for packaging purposes, comprising
   (a) one or more polymerizable polymers which contain hydroxyl groups and which are from the group of
      a1) a cellulose ester and/or cellulose ether having a content of at least 0.1 percentage weight of reactive acrylic and/or methacrylic groups and having an average molecular weight ($\overline{M}_w$) between 10,000 and 250,000 and a glass transition temperature of ($T_g$)≧ + 20 ° C,
      a2) a polyvinyl alcohol derivative having a content of ≧ 0.1 percentage weight of reactive acrylic and/or methacrylic groups and having an average molecular weight ($\overline{M}_w$) between 1,000 and 100,000 and a glass transition temperature ($T_g$) ≧ 20 ° C,
      a3) a phenol or novolac derivative having a content of ≧ 0.1 percentage weight of reactive acrylic and/or methacrylic groups, having an average molecular weight ($\overline{M}_w$) between 1,000 and 50,000 and a glass transition temperature ($T_g$)≧ - 20 ° C,
   (a) one or more polymerizable polymers which contain hydroxyl groups and which are from the group of
      a1) a cellulose ester and/or cellulose ether having a content of at least 0.1 percentage weight of reactive acrylic and/or methacrylic groups and having an average molecular weight ($M_w$) between 10,000 and 250,000 and a glass transition temperature ($T_g$)≧ + 20 ° C,
      a2) a polyvinyl-alcohol derivative having a content of ≧ 0.1 percentage weight of reactive acrylic and/or methacrylic groups and having an average molecular weight ($\overline{M}_w$) between 1,000 and 100,000 and a glass transition temperature ($T_g$) ≧ +20 ° C,
      a3) a phenol or novolac derivative having a content of ≧ 0.1 percentage weight of reactive acrylic and/or methacrylic groups, having an average molecular weight ($\overline{M}_w$) between 1,000 and 50,000 and a glass transition temperature ($T_g$)≧ - 20 ° C.
   b) one or more linear unbranched and/or branched polyesters and/or co-polyesters having a content of ≧ 0.1 percentage weight of reactive acrylic and/or or methacrylic groups having an average molecular weight ($\overline{M}_w$) between 1,000 and 20,000 and a glass transition temperature in the range of -50 to +50 ° C, wherein (b) a basis polyester, which carries hydroxyl groups and comprises:
      b1) a hydroxylpolyester having branched chains which comprise polyester units and which have branches to third and higher polyester-forming functions and/or
      b2) a hydroxylpolyester having alcyl side chains which are combined by way of ester or ether groups of third or higher polyester-forming functions and which have 2 to 50 C-atoms, in particular 4 to 36 C-atoms, is in the alcyl group and if necessary comprises
   c) a polymerisable oligomer, which carries ethylene unsaturated groups and comprises acrylic, methacrylic, ether, ester, urethane, amide, imide, epoxide, siloxane, phenol, novolac and/or mercapto compounds with an average molecular weight ($\overline{M}_w$) of 400 to 10,000 and in necessary
   d) fillers, pigments, antioxidant agents, stabilizers, flowing agents, wetting agents, and anti-foaming agents.

2. Melting masses according to claim 1 characterised in that polyester of compents (b) has a molecular weight in the region of 1,000 to 10,000.

3. Melting masses according to claim 1 or 2 characterised in that in components (b), the polyester has a glass transition temperature in the range of -50 to + 20 ° C.

4. Process for producing melting masses according to one of claims 1 to 3, characterised in that components (a) are pre-heated to their melting point, and heated +20 to +60 ° C above the melting point, if necessary the components (b) and also if necessary (c) and/or (d) are added in an atmosphere of protective gas and the components (b) and (c) are similarly preheated to temperatures, which correspond at least to the minimum melting point of components (a) and subsequently the melting

mass to be processed is degased.

**5.** Process according to claim 4, characterised in that components (a) prior to pre-heating are rinsed or washed at their melting point in a manner known per se with a protective gas and/or degased in an acqueous suspension preferably under a vacuum.

**6.** Process according to claim 4 or 5, characterised in that components (d) are added in a pre-heated condition.

**7.** Process according to claims 4 to 6, characterised in that prior to degassing the acqueous suspension in the acqueous phase, predrying is carried out at a temperature of approx. 10 °C below the melting point of components (a).

**8.** Process according to claims 4 to 7, characterised in that the final degassing is carried out at a vacuum up to $10^{-1}$.

**9.** Process according to one of claims 4 to 8, characterised in that the melting mass is cooled rapidly and if necessary granulated.

**10.** Process according to one of claims 4 to 9, characterised in that nitrogen, carbon dioxide or an inert gas are used as a protective gas.

**Revendications**

**1.** Masses fondues polymérisables, exemptes de solvants, pauvres en monomères ou exemptes de monomères, destinées à la formation de revêtements résistants à la corrosion et à l'abrasion et/ou à la formation d'un film protecteur possédant des propriétés de barrière sur des substrats plats et des pièces moulées, en métal, matière plastique, matières cellulosiques et/ou matières inorganiques, notamment à des substrats ou pièces moulées de ce genre destinés à l'emballage, composées de

(a) un ou plusieurs polymères polymérisables, contenant des groupes hydroxyles et appartenant aux groupes comprenant

a1) un ester de cellulose et/ou un éther de cellulose contenant au moins 0,1 % en poids de groupes acryles et/ou méthacryles réactifs, et ayant un poids moléculaire moyen ($\overline{M}_w$) d'entre 10 000 et 250 000 et une température de transition vitreuse ($T_g$) de ≧ + 20 °C,

a2) un dérivé d'alcool polyvinylique contenant ≧ 0,1 % en poids de groupes acryles et/ou méthacryles réactifs et ayant un poids moléculaire moyen ($\overline{M}_w$) compris entre 1000 et 100 000, et une température de transition vitreuse ($T_g$) de ≧ 20 °C, et

a3) un dérivé de phénol ou de novolaque contenant ≧ 0,1 % en poids de groupes acryles et/ou méthacryles réactifs, et ayant un poids moléculaire moyen ($\overline{M}_w$) compris entre 1000 et 50 000, et une température de transition vitreuse ($T_g$) de ≧ - 20 °C ou

(a) un ou plusieurs polymères polymérisables, contenant des groupes hydroxyles et appartenant aux groupes comprenant

a1) un ester de cellulose et/ou un éther de cellulose contenant au moins 0,1 % en poids de groupes acryles et/ou méthacryles réactifs, et ayant un poids moléculaire moyen ($\overline{M}_w$) d'entre 10 000 et 250 000 et une température de transition vitreuse ($T_g$) de ≧ 20 °C,

a2) un dérivé d'alcool polyvinylique contenant ≧ 0,1 % en poids de groupes acryles et/ou méthacryles réactifs et ayant un poids moléculaire moyen ($\overline{M}_w$) compris entre 1000 et 100 000, et une température de transition vitreuse (Tg) de ≧ 20 °C, et

a3) un dérivé de phénol ou de novolaque contenant ≧ 0,1 % en poids de groupes acryles et/ou méthacryles réactifs, et ayant un poids moléculaire moyen ($\overline{M}_w$) compris entre 1000 et 50 000, et une température de transition vitreuse ($T_g$) de ≧ - 20 °C ou

b) un ou plusieurs polyesters linéaires non ramifiés et/ou ramifiés et/ou copolyesters contenant ≧ 0,1 % en poids de groupes acryles et/ou méthacryles réactifs, et ayant un poids moléculaire moyen ($\overline{M}_w$) compris entre 10 000 et 20 000 et une température de transition vitreuse comprise dans l'intervalle de - 50 à + 50 °C, où (b) un polyester de base portant des groupes hydroxyles, composé de

b1) un hydroxylpolyester comprenant des chaînes ramifiées composées d'unités polyesters avec des ramifications sur la troisième fonction formatrice de polyester et sur les fonctions analogues

supérieures et/ou

b2) un hydroxylpolyester comprenant des chaînes latérales alkyles comprenant 2 à 50 atomes de C, en particulier 4 à 36 atomes de C, liés par l'intermédiaire de groupes esters ou éthers de la troisième fonction formatrice de polymère et des fonctions analogues de rang plus élevé, est contenu dans le groupe alkyle, et éventuellement

c) un oligomère polymérisable portant des groupes à insaturation éthylénique formés de composés acryles, méthacryles, éthers, esters, uréthanes, amides, imides, époxydes, siloxanes, phénols, novolaques et/ou mercapto, ayant un poids moléculaire moyen ($\overline{M}_w$) compris entre 2000 et 10000, et éventuellement

d) des charges, pigments, agents anti-oxydants, stabilisants, nivelants, réticulants et anti-mousse.

**2.** Masse fondue selon la revendication 1, ***caractérisée en ce que*** le polyester du constituant (b) possède un poids moléculaire compris dans l'intervalle allant de 1000 à 10000.

**3.** Masse fondue selon la revendication 1 ou 2, ***caractérisée en ce que***, dans le constituant (b), le poyester possède un température de transition vitreuse comprise dans l'intervalle allant de - 50 à + 20 ° C.

**4.** Procédé de fabrication d'une masse fondue selon une des revendications 1 à 3, ***caractérisé en ce qu***'on préchauffe le constituant (a) à son point de fusion, on le chauffe à une température supérieure de + 20 à + 60 ° C à son point de fusion, on ajoute éventuellement le constituant (b) ainsi qu'éventuellement le constituant (c) et/ou le constituant (d), sous atmosphère de gaz protecteur, les constituants (b) et (c) étant eux aussi préchauffés à des températures qui correspondent au moins au point de fusion du constituant (a) et, ensuite on dégaze la masse fondue ainsi préparé.

**5.** Procédé selon la revendication 4, ***caractérisé en ce qu***'on rince ou lave le constituant (a), avant de le préchauffer à son point de fusion, à l'aide d'un gaz protecteur, d'une façon connue en soi, et/ou on le dégaze dans une suspension aqueuse, de préférence sous vide.

**6.** Procédé selon la revendication 4 ou 5, ***caractérisé en ce qu***'on ajoute le constituant (d) à l'état préchauffé.

**7.** Procédé selon les revendications 4 à 6, ***caractérisé en ce que***, dans le dégazage de la suspension aqueuse, il s'effectue dans la phase aqueuse un pré-séchage à une température inférieure d'environ 10 ° C au point de fusion du constituant (a).

**8.** Procédé selon une des revendications 4 à 7, ***caractérisé en ce que*** le dégazage final s'effectue sous un vide pouvant atteindre $10^{-1}$ Torr.

**9.** Procédé selon une des revendications 4 à 8, ***caractérisé en ce que*** la masse fondue est rapidement refroidie et éventuellement granulée.

**10.** Procédé selon une des revendications 4 à 9, ***caractérisé en ce qu'***on utilise comme gaz protecteur de l'azote, du dioxyde de carbone ou un gaz rare.